# EUROPEAN PATENT SPECIFICATION

(11) **EP 3 711 892 B1**
(45) Date of publication and mention of the grant of the patent: **17.04.2024**
(21) Application number: 18878273.4
(22) Date of filing: 25.01.2018
(51) Int. Cl.: B23K 20/12, B23K 20/22

(54) **JOINING METHOD**
VERBINDUNGSVERFAHREN
PROCÉDÉ D'ASSEMBLAGE

(30) Priority: 15.11.2017 JP 2017220202
(43) Date of publication of application: 23.09.2020
(73) Proprietor: Nippon Light Metal Co., Ltd., Tokyo 140-8628 (JP)
(72) Inventor: HORI Hisashi, Shizuoka-shi Shizuoka 421-3203 (JP); YAMANAKA Kosuke, Shizuoka-shi Shizuoka 421-3203 (JP)
(74) Representative: Dehns
(86) International application number: PCT/JP2018/002207
(87) International publication number: WO 2019/097734

(56) References cited:
- WO-A1-2007/119343
- WO-A1-2007/119343
- WO-A1-2015/107716
- WO-A1-2015/107716
- WO-A1-2016/163214
- DE-A1-102012 001 877
- DE-A1-102012 001 877
- DE-A1-102013 000 574
- JP-A- H11 267 859
- JP-A- H11 267 859
- JP-A- 2007 160 370
- JP-A- 2013 027 923
- JP-A- 2016 215 264
- JP-A- 2016 215 264
- US-A1- 2006 289 608
- US-A1- 2011 180 587
- US-A1- 2017 216 961

## Description

The present invention relates to a joining method.

There has been a rotary tool used as a rotating tool for friction-stir welding that comprises a shoulder portion and a stirring pin that extends vertically from the shoulder portion. A friction stir welding method to join double-skin panels with this rotary tool has been known (See JP2008-279513A). This rotary tool is intended to be used with its lower face of the shoulder portion being on a metal member while a friction stirring process is under way. Since the shoulder portion is pushed onto the metal member, the plastically flowing material is kept pressed and a burr can be inhibited from being generated. However, if the height of the joined portion changes, such defects as larger concave grooves and a lot of burrs are easily generated.

On one hand, a friction stir welding method to join a couple of metal members with a rotary tool having a stirring pin is known (See JP2013-39613A). This method comprises a joining process of putting the stirring pin that is rotating into an abutted portion of a couple of metal members to friction-stir-weld them using only the stirring pin being in contact with the couple of the metal members. The stirring pin has an outer circumferential face on which a spiral groove is engraved, and friction stir welding is performed with only the stirring pin being in contact with the metal members to be joined and a base portion of the stirring pin being exposed. As a result, defects are inhibited from being generated even when the height of the joined portion changes and a load applied to the friction stir welding device can be reduced. However, since the plastically flowing material is not pressed by the shoulder portion, there are problems with a larger surface roughness of the joined portion as well as a larger concave groove formed on the joined metal members. In addition, there is another problem with a bank portion (the surface of metal member's portion that is elevated compared with that before joined) formed on each side of the concave groove.

On the other hand, JP4210148B2 describes a rotary tool comprising a shoulder portion and a stirring pin extending vertically from the shoulder portion. An outer circumferential face of the shoulder portion and an outer circumferential face of the stirring pin are tapered, respectively. On the tapered face of the shoulder portion is engraved a groove that is seen as a volute in planar view. The groove has a cross section in a half circle shape. With this tapered face, metal members can be stably joined together when a thickness of the metal member or the height of the joined portion changes. In addition, since the plastically flowing material comes into the groove, a flow of the plastically flowing material is controlled and the appropriate plasticized region is formed.

JP2013-027923A, US2006-289608A1 and JP2007-160370A disclose various friction stir welding methods and tools for use in the same. JP2013-027923A discloses a joining method for joining a first and a second metal member together using a friction stirring apparatus. The method comprising a preparation process, an overlapping and abutting process and a friction stirring process. The friction stirring apparatus comprises a tool having a substantially cylindrical shape.

However, looking to the prior art technology of JP4210148B2, the plastically flowing material comes into the groove on the tapered face and the groove does not work as intended, which is a problem. In addition, once the plastically flowing material comes into the groove, the friction stir welding is performed with the plastically flowing material stuck in the groove rubbing against the metal member material to be joined, which results in a problem with a joined portion with deteriorated joining quality. Furthermore, the joined members have a rough surface and many burrs and have a problem with a large groove on the surface being formed.

In order to solve the problems above described, the present invention is intended to provide a joining method through which the joined metal members can have a smaller groove on its surface and a smaller surface roughness.

In order to solve problems above described, viewed from a first aspect of the present invention there is provided a method of joining a first metal member and a second metal member together using a rotary tool for friction stir welding comprising a base side pin and a tip side pin, as claimed in claim 1.

Additionally, viewed from a second aspect of the present invention there is provided a method of joining a first metal member and a second metal member together using a rotary tool for friction stir welding comprising a base side pin and a tip side pin, as claimed in claim 2.

Additionally, viewed from a third aspect of the present invention there is provided a method of joining a first metal member and a second metal member together using a rotary tool for friction stir welding comprising a base side pin and a tip side pin, as claimed in claim 3.

Additionally, viewed from a fourth aspect of the present invention there is provided a method of joining a first metal member and a second metal member together using a rotary tool for friction stir welding comprising a base side pin and a tip side pin, as claimed in claim 4.

According to the joining method above described, since metal members can be held down by a circumferential face of the base side pin having a relatively large taper angle, a concave groove to be made on the resultant joined surface can be smaller and no bank portion or a smaller bank portion can be made on each side of the concave groove. Since the step portion in a staircase shape is shallow and has a wide exit, the plastically flowing material hardly adheres to the circumferential face of the base side pin though the metal members are held down by the base side pin. As a result, the surface roughness on the joined surface can be made smaller and the quality of the joined portion is reliably kept good. In addition, the rotary tool having a tip side pin can be easily inserted to a sufficiently deep position.

Moreover, according to the joining method above described, since the tip side pin of the rotary tool has a flat face, the plastically flowing material winding up around the protruding portion is held down by the flat face and oxide films in the overlapped portion can be reliably broken.

Additionally, viewed from a fifth aspect of the present invention there is provided a method of joining a first metal member and a second metal member together using a rotary tool for friction stir welding comprising a base side pin and a tip side pin, as claimed in claim 5.

Additionally, viewed from a sixth aspect of the present invention there is provided a method of joining a first metal member and a second metal member together using a rotary tool for friction stir welding comprising a base side pin and a tip side pin, as claimed in claim 6.

Additionally, the present invention has an aspect of a flat face formed on a tip of the tip side pin being inserted deep over the overlapped portion in the friction stirring process.

According to the joining method as described above, since metal members are held down by the circumferential face of the base side pin having a relatively large taper angle, a concave groove to be formed on the joined surface can be made smaller and no bank portion or a smaller bank portion can be made on the concave groove. Since the step portion in a staircase shape is shallow and has a wide exit, the plastically flowing material hardly adheres to the circumferential face of the base side pin though the metal members are held down by the base side pin. As a result, the surface roughness on the joined surface can be made smaller and the quality of the joined portion is reliably kept good. In addition, the rotary tool having a tip side pin can be easily inserted to a sufficiently deep position.

Additionally, viewed from a seventh aspect of the present invention there is provided a method of joining a first metal member and a second metal member together using a rotary tool for friction stir welding comprising a base side pin and a tip side pin, as claimed in claim 8.

According to the joining method as described above, since metal members are held down by the circumferential face of the base side pin having a relatively large taper angle, a concave groove to be formed on the joined surface can be made smaller and no bank portion or a smaller bank portion can be made on the concave groove. Since the step portion in a staircase shape is shallow and has a wide exit, the plastically flowing material hardly adheres to the circumferential face of the base side pin though the metal members are held down by the base side pin. As a result, the surface roughness on the joined surface can be made smaller and the quality of the joined portion is reliably kept good. In addition, the rotary tool having a tip side pin can be easily inserted to a sufficiently deep position.

Moreover, according to the joining method above described, since the tip side pin of the rotary tool has a flat face, the plastically flowing material winding up around the protruding portion is held down by the flat face and oxide films in the overlapped portion can be reliably broken.

Additionally, viewed from an eighth aspect of the present invention there is provided a method of joining a first metal member and a second metal member together using a rotary tool for friction stir welding comprising a base side pin and a tip side pin, as claimed in claim 9.

According to the joining method as described above, since metal members are held down by the circumferential face of the base side pin having a relatively large taper angle, a concave groove to be formed on the joined surface can be made smaller and no bank portion or a smaller bank portion can be made on the concave groove. Since the step portion in a staircase shape is shallow and has a wide exit, the plastically flowing material hardly adheres to the circumferential face of the base side pin though the metal members are held down by the base side pin. As a result, the surface roughness on the joined surface can be made smaller and the quality of the joined portion is reliably kept good. In addition, the rotary tool having a tip side pin can be easily inserted to a sufficiently deep position.

According to the present invention, a concave groove on the joined metal members can be made smaller and the surface roughness on the joined metal members can be made smaller as well.

Embodiments will now be described by way of example only with reference to the accompanying drawings, wherein:
Fig.1 is a cross-sectional view showing a preparation process of a joining method of a first embodiment of the present invention.
Fig.2 is a cross-sectional view showing an overlapping and abutting process of the joining method of the first embodiment.
Fig.3 is a side elevational view of a rotary tool.
Fig.4 is an enlarged cross-sectional view of the rotary tool.
Fig.5 is a cross-sectional view showing a friction stirring process of an upper top side portion of a joining method of the first embodiment.
Fig.6 is a cross-sectional view showing a friction stirring process of an upper back side portion of a joining method of the first embodiment.
Fig.7 is a conceptional view of a rotary tool of the prior art.
Fig.8 is a conceptional view of a rotary tool of the prior art.
Fig.9 is a cross-sectional view of an upper top side portion of a joining method of a second embodiment.
Fig. 10 is a cross-sectional view of an upper back side portion of a joining method of the second embodiment.

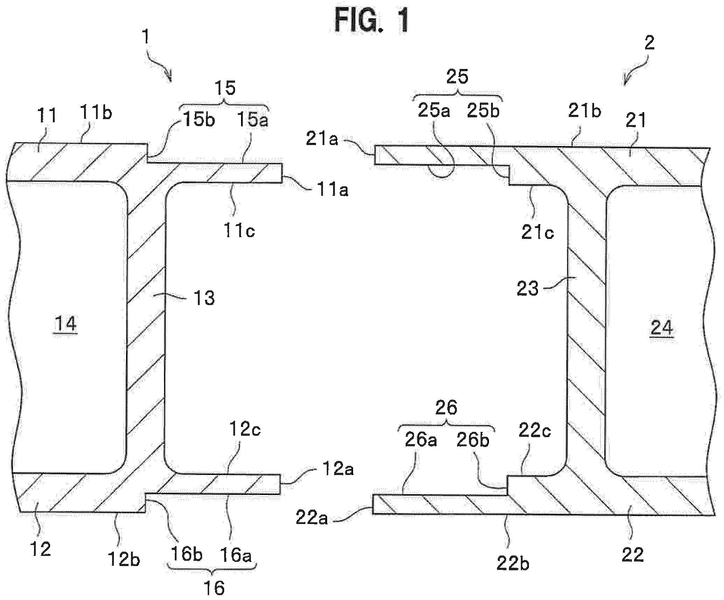

Fig. 1 1 is a cross-sectional view of an upper top side portion of a joining method of a third embodiment.

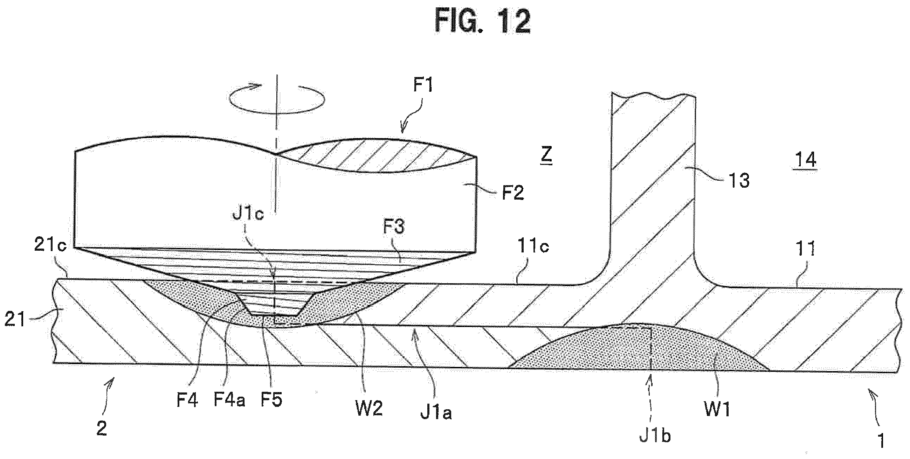

Fig. 12 is a cross-sectional view of an upper back side portion of a joining method of the third embodiment.

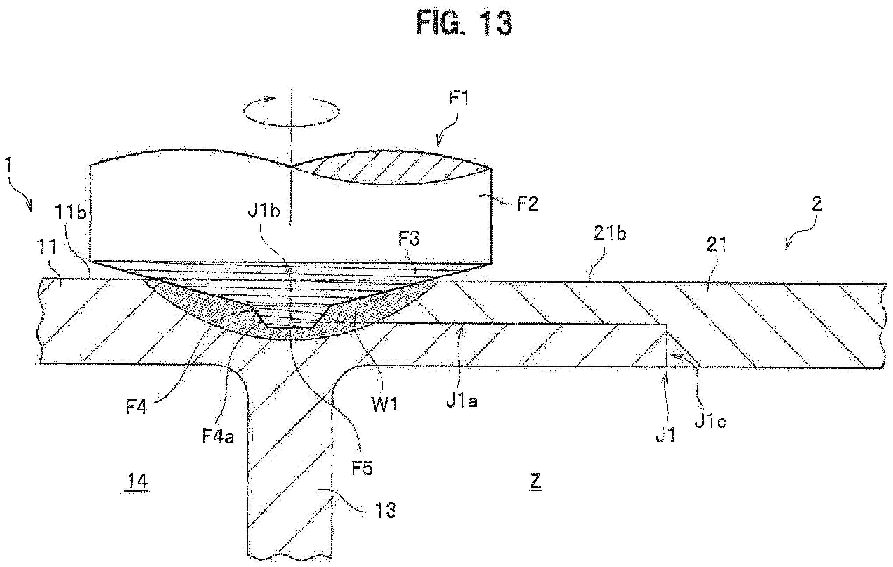

Fig. 13 is a cross-sectional view of an upper top side portion of a joining method of a fourth embodiment.

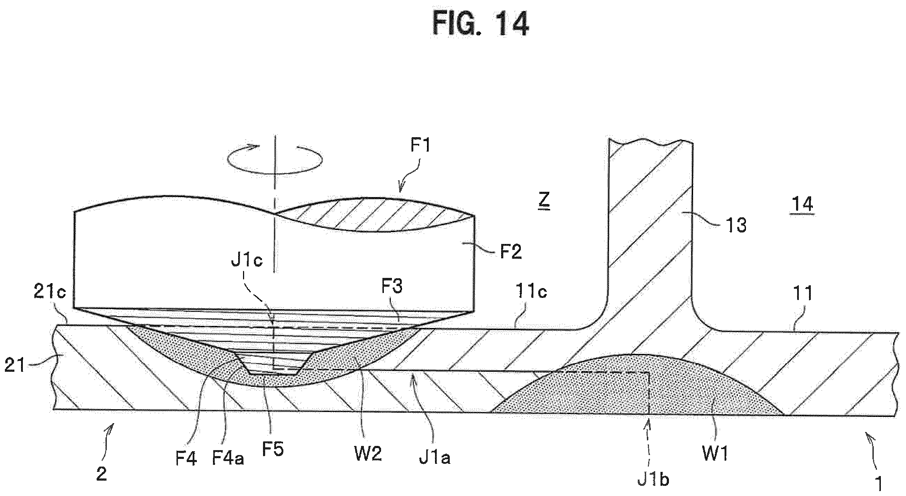

Fig. 14 is a cross-sectional view of an upper back side portion of a joining method of the fourth embodiment.

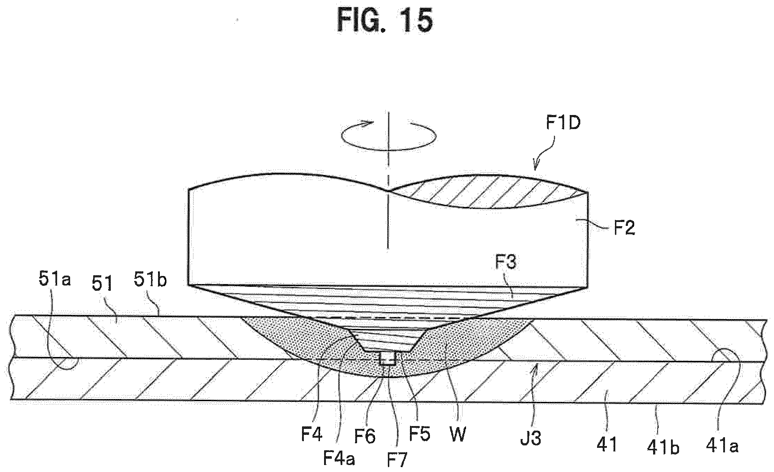

Fig. 15 is a cross-sectional view showing a friction stirring process of a joining method of a fifth embodiment.

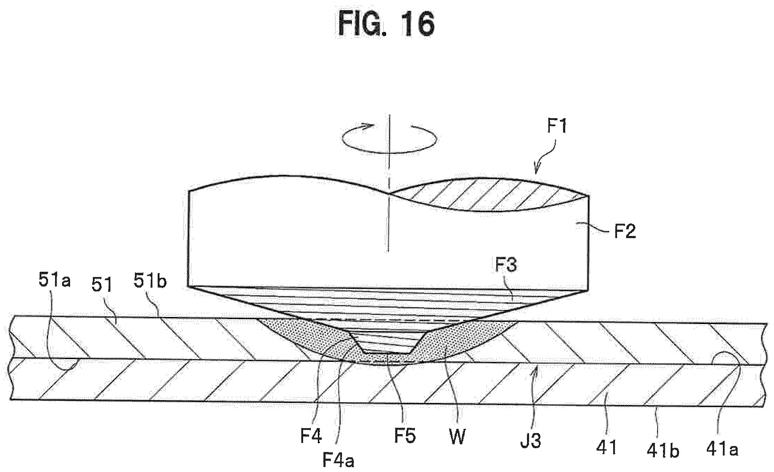

Fig. 16 is a cross-sectional view showing a friction stirring process of a joining method of a sixth embodiment.

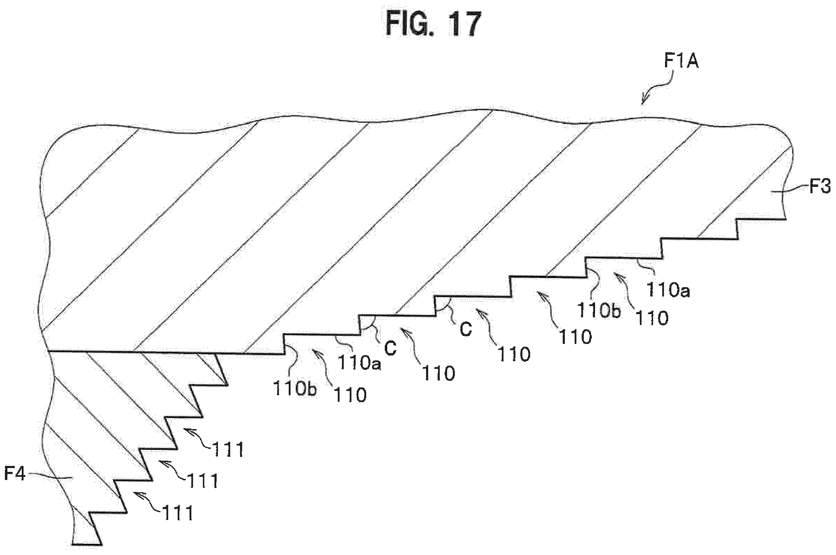

Fig. 17 is a cross-sectional view of a rotary tool of a first modified example.

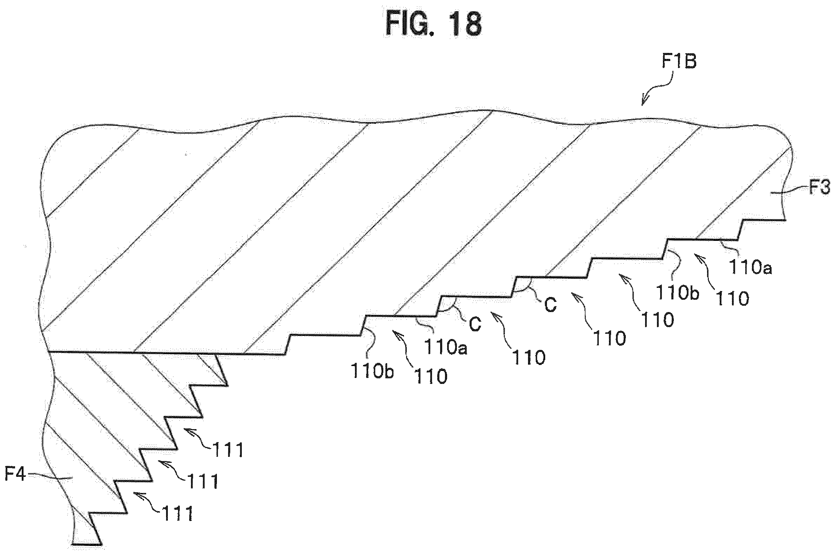

Fig. 18 is a cross-sectional view of a rotary tool of a second modified example.

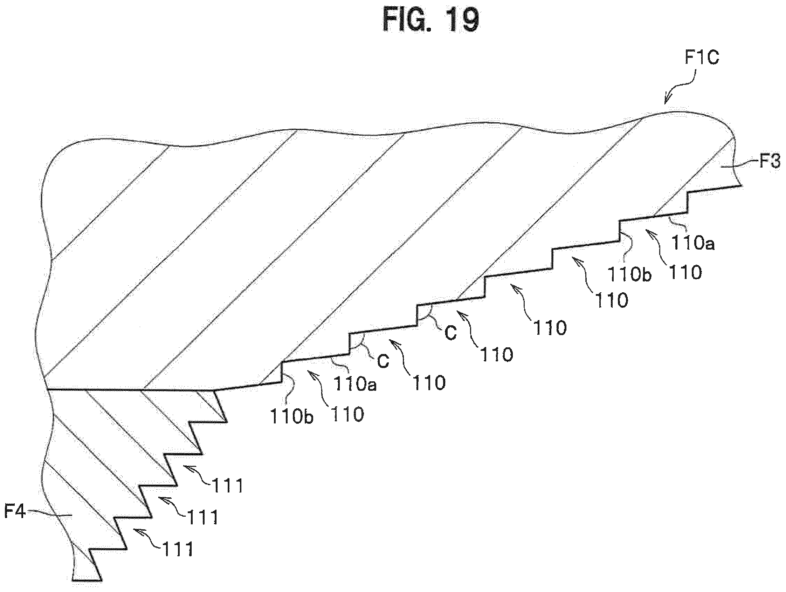

Fig.19 is a cross-sectional view of a rotary tool of a third modified example.

### <First Embodiment>

Joining methods of embodiments of the present invention are explained with reference to the attached figures. According to a joining method of the first embodiment of the present invention as shown in Fig.1, a first metal member 1 that is a double skin panel and a second metal member 2 that is the other double skin panel are joined together through friction stir welding. Hereinafter, "top face" is referred to as an opposite face to "back face".

Each of the first metal member 1 and the second metal member 2 is made of aluminium or aluminium alloys, which are materials that can be friction-stirred. A preparation process, an overlapping and abutting process and a friction stirring process are carried out in the joining process of this embodiment.

The preparation process is intended to prepare the first metal member 1 and the second metal member 2. The first metal member 1 may consist mainly of an upper base plate 11, a lower base plate 12 and a support plate 13. The first metal member 1 may be, for example, an extruded frame member. An upper step portion 15 is formed on a top face 11b that is an end portion of the upper base plate 11. The first upper step portion 15 comprises a first upper step bottom face (first step bottom face) 15a and a first upper step side face (first step side face) 15b. The first upper step bottom face 15a and the first upper step side face 15b are vertical to each other. An inner space 14 is formed between the upper base plate 11 and the lower base plate 12.

A first lower step portion 16 is formed on an end portion of a top face 12b of the lower base plate 12. The first lower step portion 16 comprises a first lower step bottom face (first step bottom face) 16a and a first lower step side face (first step side face) 16b. The first lower step bottom face 16a and the first lower step side face 16b are vertical to each other. The support plate 13 is a plate-like shaped member that is vertically joined to each of a back face 11c of the upper base plate 11 and a back face 12c of the lower base plate 12. A corner portion between the upper base plate 11 and the support plate 13 is in an arc shape. A corner portion between the lower base plate 12 and the support plate 13 is in an arc shape as well.

The second metal member 2 consists mainly of an upper base plate 21, a lower base plate 22 and a support plate 23. The second metal member 2 may be an extruded frame member. A second upper step portion 25 is formed on a back face 21c that is an end portion of the upper base plate 21. The second upper step portion 25 comprises a second upper step bottom face (second step bottom face) 25a and a second upper step side face (second step side face) 25b. The second upper step bottom face 25a and the second upper step side face 25b are vertical to each other. An inner space 24 is formed between the upper base plate 21 and the lower base plate 22.

A second lower step portion 26 is formed on an end portion of a back face 22c of the lower base plate 22. The second lower step portion 26 comprises a second lower step bottom face (second step bottom face) 26a and a second lower step side face (second step side face) 26b. The second lower step bottom face 26a and the second lower step side face 26b are vertical to each other. The support plate 23 is a plate-like shaped member that is joined to a back face 21c of the upper base plate 21 and a back face 22c of the lower base plate 22 so as to be vertical to them. Corner portions between the upper base plate 21 and the support plate 23 are in an arc shape. Corner portions between the lower base plate 22 and the support plate 23 are in an arc shape as well.

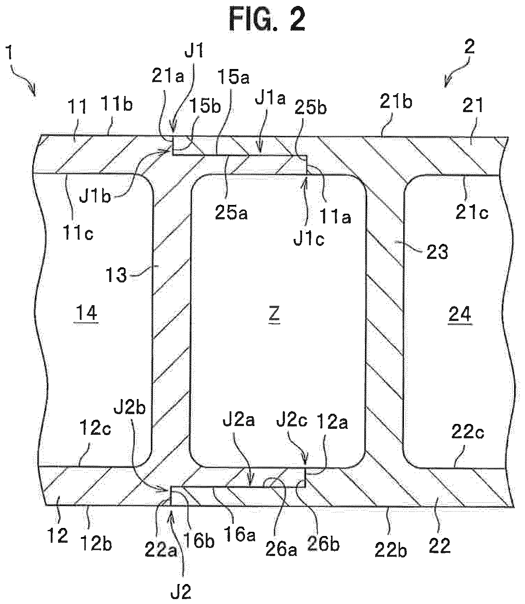

The overlapping and abutting process is intended to have an end portion of the first metal member 1 and an end portion of the second metal member 2 abut each other to form an abutted portion J1 and an abutted portion J2, as shown in Fig.2. The abutted portion J1 includes an upper overlapped portion (overlapped portion) J1a, an upper top side abutted portion J1b and an upper back side abutted portion J1c. The upper overlapped portion J1a is formed of the first step bottom face 15a and the second upper step bottom face 25a that are overlapped with each other. An inner space Z is formed between the support plate 13 and the support plate 23.

The upper top side abutted portion J1b is formed of the first upper step side face 15b and an end face 21a of the upper base plate 21 that abut each other. The upper back side abutted portion J1c is formed of an end face 11a of the upper base plate 11 and the second upper step side face 25b that abut each other.

The abutted portion J2 includes a lower overlapped portion (overlapped portion) J2a, a lower top side abutted portion J2b and a lower back side abutted portion J2c. The lower overlapped portion J2a is formed of the first lower step bottom face 16a and the second lower step bottom face 26a that are overlapped with each other. The lower top side abutted portion J2b is formed of the first lower step side face 16b and an end face 22a of the lower base plate 22 that abut each other. The second back side abutted portion J2c is formed of an end face 12a of the lower base plate 12 and the second lower step side face 26b that abut each other. Since the first metal ember 1 and the second metal member 2 abut each other so that each of the abutted portions J1, J2 is in a crank shape in a cross-sectional view as explained, the abutted portions J1, J2 are prevented from being displaced during the friction stirring process.

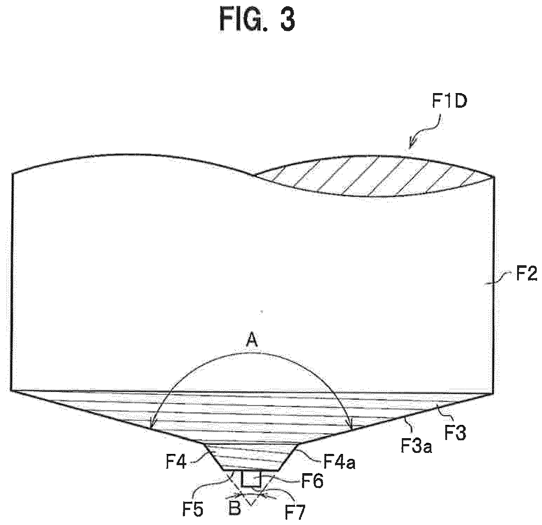

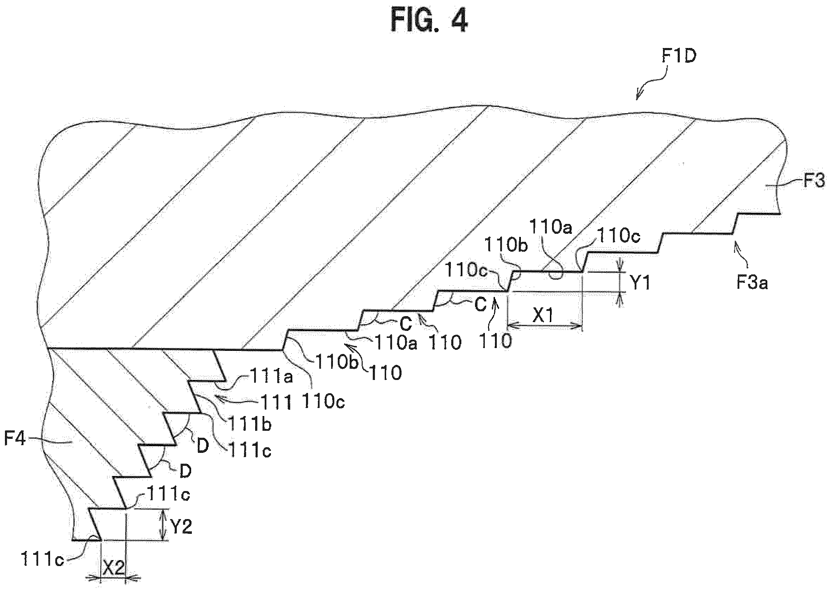

The friction stirring process is a process to perform friction stir welding with a rotary tool F1D on the abutted portions J1, J2, as shown in Fig.3 and Fig.4. As shown in Fig.3, the rotary tool F1D is a tool used for friction stir welding. The rotary tool F1D is made, for example, of a tool steel. The rotary tool F1D consists mainly of a base axis portion F2, a base side pin F3 and a tip side pin F4. The tip side pin F4 has a flat face F5, on which a protruding portion F6 protruding downward is formed. The base axis portion F2 is in a columnar shape and is a member to be connected with a spindle of a friction stirring apparatus. The flat face F5 of the tip side pin F4 is vertical to a rotation axis.

The base side pin F3 extends continuously from the base axis portion F2 and is tapered toward its tip. The base side pin F3 has a shape of a truncated cone. A taper angle A of the base side pin F3 may be set appropriately and is, for example, between 135° and 160°. If the taper angle A is smaller than 135° or larger than 160°, the joined portion has a large surface roughness after friction stir welding is finished. The taper angle A is larger than a taper angle B of the tip side pin F4, as is to be explained below. As shown in Fig.4, a step portion 110 in a staircase shape is formed over an outer circumferential face of the base side pin F3 and from a bottom to a top of the base side pin F3. The step portion 110 is formed to extend spirally from the bottom clockwise or counterclockwise. That is to say, the step portion 110 is in a spiral shape in the plan view while the step portion 110 is in a staircase shape in the cross-sectional view. In this embodiment, since the rotary tool is rotated clockwise, the step portion 110 is formed in a counterclockwise direction from the bottom to the top of the base side pin F3.

If the rotary tool is rotated counterclockwise, the step portion 110 is formed preferably in a clockwise direction from the bottom to the top. In this way, the plastically flowing material is directed to the top of the base side pin F3 and less of the plastically flowing material can come out of the joined metal material. The step portion 110 consists of a step bottom face 110a and a step side face 110 b. A length (horizontal direction pitch) X1 between a couple of adjacent apexes 110c, 110c of the step portion 110 may be determined appropriately based on a step angle C and a height Y1 of the step side face 110b which are to be described below.

The height Y1 of the step side face 110b may be appropriately determined and is, for example, set to 0.1-0.4mm. If the height Y1 is smaller than 0.1mm, the joined surface has a larger surface roughness. On the other hand, if the height Y1 is larger than 0.4mm, the joined surface is likely to have a larger surface roughness and an effective number of steps (number of steps of the step portion 110 that are in contact with plastically flowing material) decreases.

The step angle C between the step bottom face 110a and the step side face 110b may be set appropriately and is set to 85°~120°. The step bottom face 110a slopes in the direction of the circumference from the rotation axis of the tool to the circumference at an angle within -5°~15° relative to the horizontal face (a negative angle corresponds to sloping downward from the horizontal face and a positive angle corresponds sloping upward from the horizontal face). The step bottom face 110a is in parallel with the horizontal face in this embodiment. The length X1, the height Y1 of the step side face Y1, the step angle C and the angle of the step bottom face 110a relative to the horizontal face are set in such a way that when friction stir welding is under way, the plastically flowing material moves out of the step portion 110 without being stuck in and adhering to the step portion 110 and the step bottom face 110a holds down the plastically flowing material to reduce the surface roughness after the joining.

The tip side pin F4 is formed to extend continuously from the base side pin F3. The tip side pin F4 is in the shape of a truncated cone shape. The flat face F5 is formed on the tip of the tip side pin F4. The flat face F5 is vertical to the rotation axis of the rotary tool F1D. The taper angle B of the tip side pin F4 is smaller than the taper angle A of the base side pin F3. A spiral groove 111 is engraved on the outer circumferential face of the tip side pin F4. The spiral groove 111 may be clockwise or counterclockwise. The spiral groove 111 is engraved counterclockwise from the bottom to the tip of the tip side pin F4 in the present embodiment in order to have the rotary tool F1D rotate clockwise.

If the rotary tool F1D is made to rotate counterclockwise, the spiral groove 111 is preferably engraved clockwise from the bottom to the tip. In this way, the spiral groove 111 directs the plastically flowing material to the tip, which enables reducing the plastically flowing metal coming out of the metal members to be joined. The spiral groove 111 consists of a spiral bottom face 111a and a spiral side face 111b. A length X2 is defined as a distance (horizontal direction distance) between a couple of adjacent apexes 111c, 111c of the spiral groove 111. A height Y2 is defined as a height of a spiral side face 111b. A spiral groove angle D between the spiral bottom face 111a and the spiral side face 111b is, for example, formed to be 45° ~ 90°. The spiral groove 111 functions to increase friction heat when coming in contact with the metal members to be joined and to direct the plastically flowing material to the tip.

As shown in Fig.3, the protruding portion F6 is formed in the centre of the flat face F5 and coaxially with the base side portion F2 and protrudes from the flat face F5. The protruding portion F6 may be in any shape and is in a columnar shape in the present embodiment. A spiral groove may be engraved on the side face of the protruding portion F6.

An upper top side friction stirring process, an upper back side friction stirring process, a lower top side friction stirring process and a lower back side friction stirring process are performed in the friction stirring process of the present embodiment.

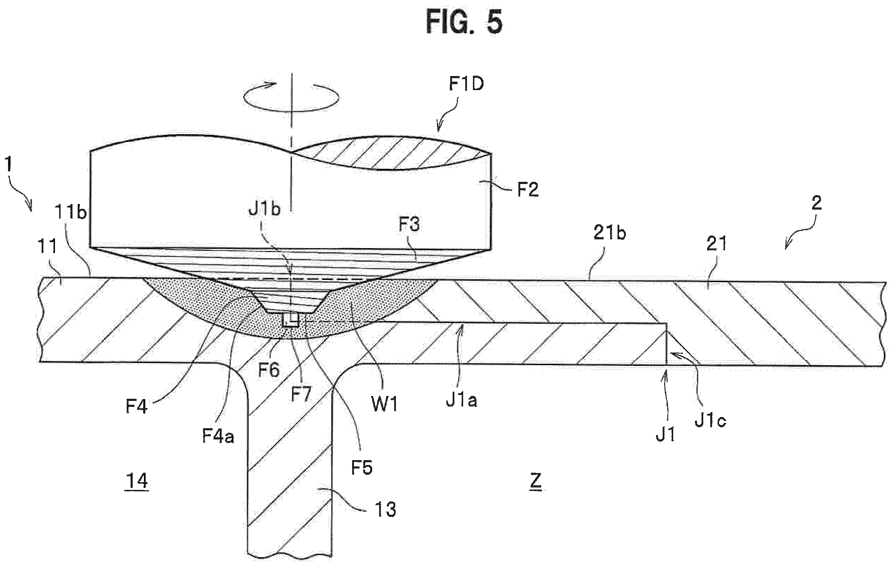

In the upper top side friction stirring process, the rotary tool F1D rotating clockwise is inserted into the upper top side abutted portion J1b as shown in Fig.5 and moves along the upper top side abutted portion J1b. In Fig.5, the rotary tool F1D rotating clockwise is made to move from the frontside toward the backside. An insertion depth by which the rotary tool F1D is inserted is set to such a depth that at least a portion of the base side pin F3 is in contact with both the top face 11b of the upper base plate 11 of the first metal member 1 and the top face 21b of the upper base plate 21 of the second metal member 2. In the present embodiment, the insertion depth is set to such a depth that a portion of the circumferential face of the base side pin F3 that is close to the tip side pin F4 is in contact with the top face 11b of the upper base plate 11 and the top face 21b of the upper base plate 21. Accordingly, friction stir welding is performed with the circumferential face of the base side pin F3 of the rotary tool F1D holding down the top face 11b of the upper base plate 11 and the top face 21b of the upper base plate 21.

In addition, the insertion depth of the rotary tool F1D in this embodiment should be set to so large a depth that a tip face F7 of the protruding portion F6 is inserted deep over the upper overlapped portion J1a with the flat face F5 of the tip side pin F4 being in contact with both the first metal member 1 and the second metal member 2. Therefore, the tip face F7 of the protruding portion F6 is inserted so deep that the tip face F7 is in contact only with the first metal member 1. In other words, the insertion depth of the rotary tool F1D should be set to such a depth that the upper overlapped portion J1a is disposed on the side face of the protruding portion F6. A plasticized region W1 is formed along a track along which the rotary tool F1D moves.

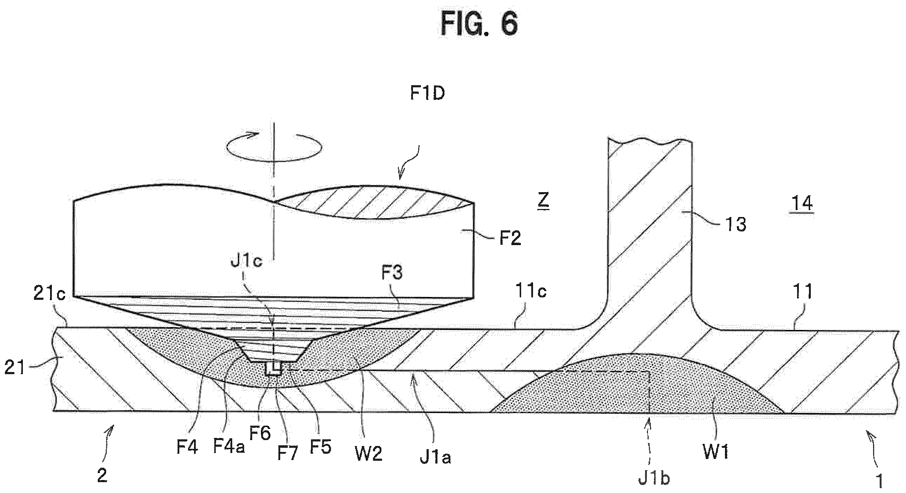

In the upper back side friction stirring process, the rotary tool F1D rotating clockwise is inserted into the upper back side abutted portion J1c as shown in Fig.6 and moves along the upper back side abutted portion J1c. As seen in Fig.6, the rotary tool F1D is made to move from the front side toward the backside. An insertion depth by which the rotary tool F1D is inserted is set to such a depth that at least a portion of the base side pin F3 is in contact with both the back face 11c of the upper base plate 11 of the first metal member 1 and the back face 21c of the upper base plate 21 of the second metal member 2. In the present embodiment, the insertion depth is set to such a depth that a portion of the circumferential face of the base side pin F3 that is close to the tip side pin F4 is in contact with the back face 11c of the upper base plate 11 and the back face 21c of the upper base plate 21. Accordingly, friction stir welding is performed with the circumferential face of the base side pin F3 of the rotary tool F1D holding down the back face 11c of the upper base plate 11 and the back face 21c of the upper base plate 21.

In addition, the insertion depth of the rotary tool F1D should be set to so large a depth that a tip face F7 of the protruding portion F6 is inserted deep over the upper overlapped portion J1a with the flat face F5 of the tip side pin F4 is in contact with both the first metal member 1 and the second metal member 2. Therefore, the tip face F7 of the protruding portion F6 is inserted so deep that the tip face F7 is in contact only with the second metal member 2. In other words, the insertion depth of the rotary tool F1D should be set to such a depth that the upper overlapped portion J1a is disposed on the side face of the protruding portion F6. A plasticized region W2 is formed along a track along which the rotary tool F1D moves. The rotary tool F1D may be attached to an arm robot equipped with such a rotation drive means as having a spindle unit on its end portion. Using the robot like this enables easily performing the joining operation in a narrow space like the inner space Z.

In the lower top side friction stirring process, the rotary tool F1D rotating clockwise is inserted into the lower top side abutted portion J2b as shown in Fig.2 and moves along the lower top side abutted portion J2b. The lower top side friction stirring process is performed in the same manner as the upper top side friction stirring process. Then a detail description on it is skipped.

In the lower back side friction stirring process, the rotary tool F1D rotating clockwise is inserted into the lower back side abutted portion J2c as shown in Fig.2 and moves along the lower back side abutted portion J2c. The lower back side friction stirring process is performed in the same manner as the upper back side friction stirring process. Then a detail description on it is skipped. The first metal member 1 and the second metal member 2 are joined together through the process above described. In addition to the processes above mentioned, a burr removal process may be performed.

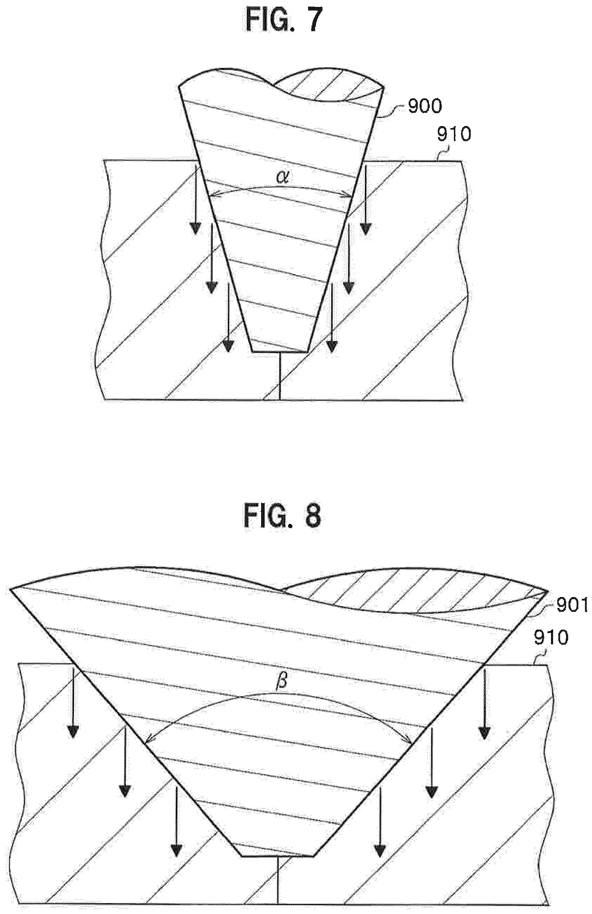

If friction stir welding is performed using a rotary tool 900 of the conventional art as shown in Fig.7, the top face of the joined metal member 910 is not held down by a shoulder portion of the rotary tool 900. As a result, there are problems with a large concave groove (formed of a top face of the joined metal member and a top face of the plasticized region) being generated and the large surface roughness. There is other problem with a bank portion (a portion of the joined metal member whose surface is elevated from before the joining) is formed on each side of the concave groove. On the other hand, if a rotary tool 901 as shown in Fig.8 having a taper angle β larger than a taper angle α of the rotary tool 900 is used, the top face of the metal members to be joined is held down better than the rotary tool 900. As a result, the concave groove becomes smaller and the bank portion is made smaller. However, since more of the plastically flowing material moves downward, a kissing bond is more likely to be formed under the plasticized region.

Looking at the rotary tool F1D of the present embodiment, the rotary tool F1D comprises the base side pin F3 and the tip side pin F4 having the taper angle B smaller than the taper angle A of the base side pin F3. Due to this configuration, the rotary tool F1D is easily inserted into the first metal member 1 and the second metal member 2. Since the taper angle B of the tip side pin F4 is small, the rotary tool F1D can be easily pushed to a deep position in the first metal member 1 and the second metal member 2. In addition, since the taper angle B of the tip side pin F4 is small, the plastically flowing material can be inhibited from moving downward compared with the rotary tool 901. As a result, kissing bonds can be prevented from being generated under the plasticized regions W1, W2. On the hand, since the taper angle A of the base side pin F3 is large, metal members to be joined can be joined reliably even if the thickness of the metal members or the height of the joined portion changes.

Moreover, since the circumferential face of the base side pin F3 holds down the plastically flowing material, the concave groove that is generated on the joined surface can be made smaller and the bank portion that can be made on each side of the concave groove is not made or made lower. In addition, since the step portion 110 in a staircase shape is relatively shallow and has a relatively wide exit, the plastically flowing material can easily move out of the step portion 110 while it is being held down by the step bottom face 110a. Therefore, it is difficult for the plastically flowing material to adhere to the circumferential face of the base side pin F3 though the plastically flowing material is held down by the base side pin F3. As a result, the surface roughness can be made smaller and the joining quality is preferably stabilized.

Moreover, since the tip face F7 of the protruding portion F6 is inserted deep over the upper overlapped portion J1a or the lower overlapped portion J2a in each friction welding process of the present embodiment, portions around each of the upper abutted portion J1a and the lower overlapped portion J2a can be reliably joined. For example, in the upper top side friction stirring process, friction stir welding is performed on both the upper overlapped portion J1a and the upper top side abutted portion J1b, and the joining strength becomes higher.

Furthermore, since the tip side pin F4 of the rotary tool F1D has the flat face F5, the plastically flowing material winding up around the protruding portion F6 is held down by the flat face F5 in the present embodiment. In addition, the tip face F7 of the protruding portion F6 is inserted deep over the upper overlapped portion J1a or the lower overlapped portion J2a in each friction stirring process. Accordingly, oxide films in each of the upper overlapped portion J1a and the lower overlapped portion J2a are reliably broken.

### <Second embodiment>

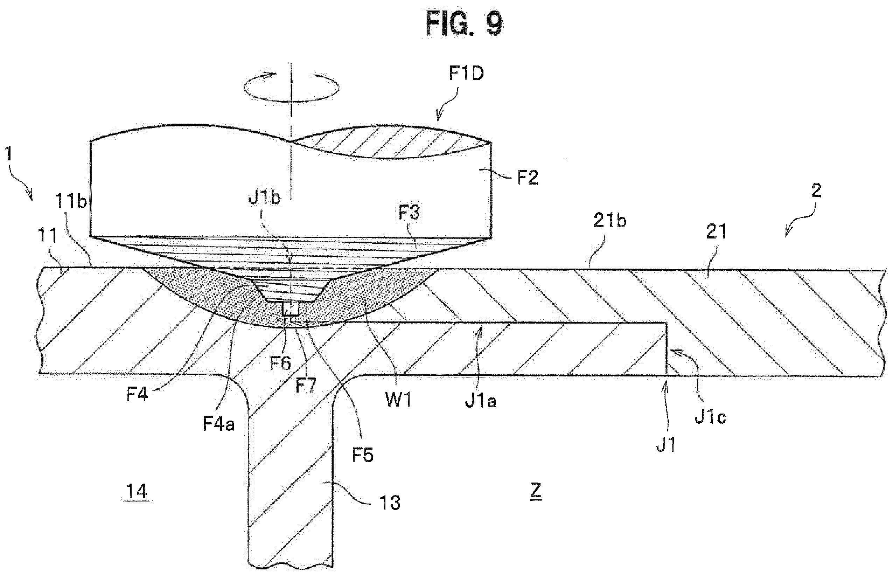

Next, a joining method of a second embodiment of the present invention is described with reference to Fig.9. A preparation process, an overlapping and abutting process and a friction stirring process are performed in the joining method of the present embodiment. This embodiment differs from the first embodiment in the insertion depth of the rotary tool F1D in the friction stirring process. The following description focusses on the different configuration.

As is shown in Fig.9, the rotary tool F1D that is rotating clockwise is inserted into the upper top side abutted portion J1b and made to move along the upper top side abutted portion J1b in the upper top side friction stirring process. As seen in Fig.9, the rotary tool F1D is moved from the front side toward the back side. The insertion depth of the rotary tool F1D is set to such a depth that at least a portion of the base side pin F3 is in contact with both the top face 11b of the upper base plate 11 of the first metal member 1 and the top face 21b of the upper base plate 21 of the second metal member 2. In the present embodiment, the insertion depth is set to such a depth that a portion of the circumferential face of the base side pin F3 that is close to the tip side pin F4 is in contact with the top face 11b of the upper base plate 11 and the top face 21b of the upper base plate 21. Accordingly, friction stir welding is performed with the circumferential face of the base side pin F3 of the rotary tool F1D holding down the top face 11b of the upper base plate 11 and the top face 21b of the upper base plate 21.

In addition, the insertion depth of the rotary tool F1D in this embodiment is set to such a depth that each of the flat face F5 of the tip side pin F4 and the tip face F7 of the protruding portion F6 are in contact with both the first metal member 1 and the second metal member 2. Accordingly, the insertion depth of the rotary tool F1D is set to be smaller than a depth to the upper overlapped portion J1a so that the tip face F7 of the protruding portion F6 does not come in contact with the upper overlapped portion J1a. A plasticized region W1 is formed along a track along which the rotary tool F1D moves.

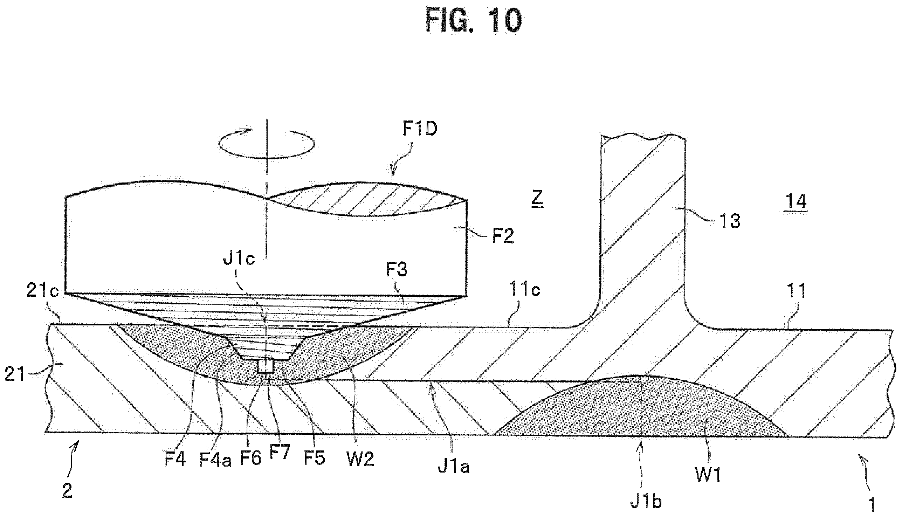

As is shown in Fig.10, the rotary tool F1D that is rotating clockwise is inserted into the upper back side abutted portion J1c and made to move along the upper back side abutted portion J1c in the upper back side friction stirring process. In Fig.10, the rotary tool F1D is moved from the front side toward the back side. The insertion depth of the rotary tool F1D is set to such a depth that at least a portion of the base side pin F3 is in contact with both the back face 11c of the upper base plate 11 of the first metal member 1 and the back face 21c of the upper base plate 21 of the second metal member 2. In the present embodiment, the insertion depth is set to such a depth that a portion of the circumferential face of the base side pin F3 that is close to the tip side pin F4 is in contact with the back face 11c of the upper base plate 11 and the back face 21c of the upper base plate 21. Accordingly, friction stir welding is performed with the circumferential face of the base side pin F3 of the rotary tool F1D holding down the back face 11c of the upper base plate 11 and the back face 21c of the upper base plate 21.

In addition, the insertion depth of the rotary tool F1D in this embodiment is set to such a depth that each of the flat face F5 of the tip side pin F4 and the tip face F7 of the protruding portion F6 are in contact with both the first metal member 1 and the second metal member 2. Accordingly, the insertion depth of the rotary tool F1D is set to be smaller than the depth to the upper overlapped portion J1a so that the tip face F7 of the protruding portion F6 does not come in contact with the upper overlapped portion J1a. A plasticized region W2 is formed along a track along which the rotary tool F1D moves.

The lower top side friction stirring process and the lower back side friction stirring process are performed in the same manner as the upper top side friction stirring process and the upper back side friction stirring process. Then the detailed explanations on them are skipped. According to the processes described above, the first metal member 1 and the second metal member 2 are joined together. In addition to the processes above mentioned, a burr removal process may be performed.

According to the joining method as explained above, more or less equivalent effects to those the first embodiment has are obtained. It should be noted that although the tip face F7 of the protruding portion F6 is not inserted so deep as to come across and over the upper overlapped portion J1a or the lower overlapped portion J2a, the plasticized regions W1, W2 are formed to enlarge respectively across and over the upper overlapped portion J1a or the lower overlapped portion J2a in this embodiment. Therefore, the high joining strength is obtained.

### <Third Embodiment>

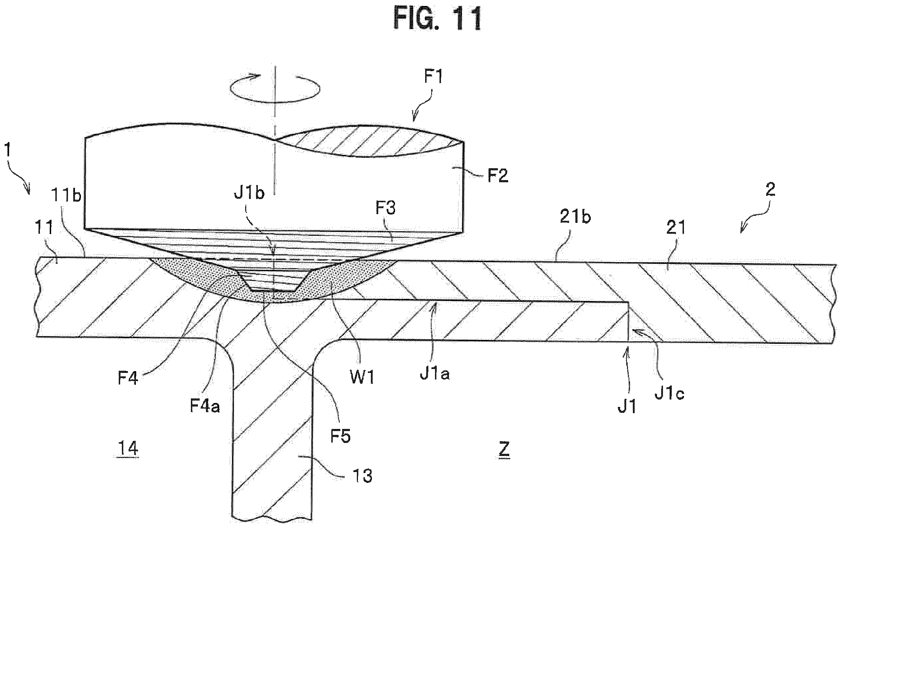

Next, a joining method of a third embodiment of the present invention is described with reference to Fig.11. A preparation process, an overlapping and abutting process and a friction stirring process are performed in the joining method of this embodiment. The rotary tool used for this joining method is different from that used for the first and second embodiments. The following description focusses on the different configuration.

As shown in Fig.11, a rotary tool F1 of the present embodiment differs from the rotary tool F1D used for the first and second embodiments in that the rotary tool F1 does not have the protruding portion F6 protruding from and formed on the flat face F5 of the tip side pin F4.

In the upper top side friction stirring process as shown in Fig.11, the rotary tool F1 that is rotating clockwise is inserted into the upper top side abutted portion J1b and is made to move along the upper top side abutted portion J1b. As seen in Fig.11, the rotary tool F1 is made to move from the front side toward the back side. The insertion depth of the rotary tool is set to such a depth that at least a portion of the base side pin F3 is in contact with the top face 11b of the upper base plate 11 and the top face 21b of the upper base plate 21. In the present embodiment, the insertion depth is set to such a depth that a portion of the circumferential face of the base side pin F3 that is close to the tip side pin F4 is in contact with the top face 11b of the upper base plate 11 and the top face 21b of the upper base plate 21. Accordingly, friction stir welding is performed with the circumferential face of the base side pin F3 of the rotary tool F1 holding down the top face 11b of the upper base plate 11 and the top face 21b of the upper base plate 21.

In addition, the insertion depth of the rotary tool F1 in this embodiment is set to such a depth that the flat face F5 of the tip side pin F4 is in contact with both the first metal member 1 and the second metal member 2. Accordingly, the insertion depth of the rotary tool F1 is set to be smaller than the upper overlapped portion J1a so that the flat face F5 of the base side pin F4 does not come in contact with the upper overlapped portion J1a. A plasticized region W1 is formed along a track along which the rotary tool F1 moves.

In the upper back side friction stirring process as shown in Fig.12, the rotary tool F1 that is rotating clockwise is inserted into the upper back side abutted portion J1c and made to move along the upper back side abutted portion J1c. In Fig.12, the rotary tool F1 is moved from the front side toward the back side. The insertion depth of the rotary tool F1 is set to such a depth that at least a portion of the base side pin F3 is in contact with both the back face 11c of the upper base plate 11 of the first metal member 1 and the back face 21c of the upper base plate 21 of the second metal member 2. In the present embodiment, the insertion depth is set to such a depth that a portion of the circumferential face of the base side pin F3 that is close to the tip side pin F4 is in contact with the back face 11c of the upper base plate 11 and the back face 21c of the upper base plate 21. Accordingly, friction stir welding is performed with the circumferential face of the base side pin F3 of the rotary tool F1 holding down the back face 11c of the upper base plate 11 and the back face 21c of the upper base plate 21.

In addition, the insertion depth of the rotary tool F1 in this embodiment is set to such a depth that the flat face F5 of the tip side pin F4 is in contact with both the first metal member 1 and the second metal member 2. Accordingly, the insertion depth of the rotary tool F1 is set to be smaller than the depth to the upper overlapped portion J1a so that the flat face F5 of the base side pin F4 does not come in contact with the upper overlapped portion J1a. A plasticized region W2 is formed along a track along which the rotary tool F1 moves.

The lower top side friction stirring process and the lower back side friction stirring process are performed in the same manner as the upper top side friction stirring process and the upper back side friction stirring process. Then the detailed explanations on them are skipped. According to the processes described above, the first metal member 1 and the second metal member 2 are joined together. In addition to the processes above mentioned, a burr removal process may be performed.

According to the joining method as explained above, more or less equivalent effects to those the first embodiment has are obtained. It should be noted that although the flat face F5 of the base side pin F5 is not inserted so deep as to come across and over the upper overlapped portion J1a or the lower overlapped portion J2ae, the plasticized regions W1, W2 are formed to enlarge respectively across and over the upper overlapped portion J1a or the lower overlapped portion J2a in this embodiment. Therefore, the high joining strength is obtained.

### <Fourth Embodiment>

Next, a joining method of a fourth embodiment of the present invention is described with reference to Fig.13. A preparation process, an overlapping and abutting process and a friction stirring process are performed in the joining method of this embodiment. The insertion depth of the rotary tool used for this joining method is different from that used for the third embodiment. The following description focusses on the different configuration.

In the upper top side friction stirring process as shown in Fig. 13, the rotary tool F1 that is rotating clockwise is inserted into the upper top side abutted portion J1b and is made to move along the upper top side abutted portion J1b. In Fig.13, the rotary tool F1 is made to move from the front side toward the back side. The insertion depth of the rotary tool is set to such a depth that at least a portion of the base side pin F3 is in contact with the top face 11b of the upper base plate 11 and the top face 21b of the upper base plate 21. In this embodiment, the insertion depth is set to such a depth that a portion of the circumferential face of the base side pin F3 that is positioned around at half the height of the base side pin F3 in an axial direction of the base side pin F3 is in contact with the top face 11b of the upper base plate 11 of the first metal member 1 and the top face 21b of the upper base plate 21 of the second metal member 2. Accordingly, friction stir welding is performed with the circumferential face of the base side pin F3 of the rotary tool F1 holding down the top face 11b of the upper base plate 11 and the top face 21b of the upper base plate 21.

In addition, the insertion depth of the rotary tool F1 in this embodiment is set to such a depth that the flat face F5 of the tip side pin F4 is inserted deep over the upper top side overlapped portion J1a with the base side pin F3 and the tip side pin F4 of the rotary tool F1 being in contact with both the upper base plate 11 of the first metal member 1 and the upper base plate 21 of the second metal member 2. Accordingly, the flat face F5 of the tip side pin F4 is inserted to be in contact only with the first metal member 1. In other words, the insertion depth of the rotary tool F1 is set to such a depth that the upper top side overlapped portion J1a is on the side of the tip side pin F4. A plasticized region W1 is formed along a track along which the rotary tool F1 moves.

In the upper back side friction stirring process as shown in Fig.14, the rotary tool F1 that is rotating clockwise is inserted into the upper top side abutted portion J1c and is made to move along the upper top side abutted portion J1c. As seen from Fig.14, the rotary tool F1 is made to move from the front side toward the back side. The insertion depth of the rotary tool F1 is set to such a depth that at least a portion of the base side pin F3 is in contact with the back face 11c of the upper base plate 11 of the first metal member 1 and the back face 21c of the upper base plate 21 of the second metal member 2. In the present embodiment, the insertion depth is set to such a depth that a portion of the circumferential face of the base side pin F3 that is positioned around at half the height of the base side pin F3 in the axial direction of the base side pin 3 is in contact with the back face 11c of the upper base plate 11 and the back face 21c of the upper base plate 21. Accordingly, friction stir welding is performed with the circumferential face of the base side pin F3 of the rotary tool F1 holding down the back face 11c of the upper base plate 11 and the back face 21c of the upper base plate 21.

In addition, the insertion depth of the rotary tool F1 in this embodiment is set to such a depth that the flat face F5 of the tip side pin F4 is inserted deep over the upper top side overlapped portion J1a with the base side pin F3 and the tip side pin F4 of the rotary tool F1 being in contact with both the upper base plate 11 of the first metal member 1 and the upper base plate 21 of the second metal member 2. Accordingly, the flat face F5 of the tip side pin F4 is inserted to be in contact only with the second metal member 2. In other words, the insertion depth of the rotary tool F1 is set to such a depth that the upper top side overlapped portion J1a is on the side of the tip side pin F4. A plasticized region W2 is formed along a track along which the rotary tool F1 moves.

The lower top side friction stirring process and the lower back side friction stirring process are performed in the same manner as the upper top side friction stirring process and the upper back side friction stirring process. Then the detailed explanations on them are skipped. According to the processes described above, the first metal member 1 and the second metal member 2 are joined together. In addition to the processes above mentioned, a burr removal process may be performed.

According to the joining method as explained above, more or less equivalent effects to those the first embodiment has are obtained. Since the flat face F5 of the tip side pin F4 is inserted deep over the upper overlapped portion J1a or the lower overlapped portion J2a in each friction stirring process in the present embodiment, portions around each of the upper overlapped portion J1a and the lower overlapped portion J2a are reliably joined. For example, friction stir welding is performed on both the upper overlapped portion J1a and the upper top side abutted portion J1b in the upper top side friction welding process and the joining strength becomes larger accordingly.

### <Fifth Embodiment>

Next, a joining method of a fifth embodiment of the present invention is described with reference to Fig.15. The joining method of the fifth embodiment differs from the first embodiment in that the first metal member 1 and the second metal member 2 which are in a shape of a plate are used for the joining method of the fifth embodiment. The following description on the fifth embodiment focusses on the different configuration. A preparation process, a stacking process and a friction stirring process are performed in the joining method of this embodiment.

The preparation process is intended to prepare the first metal member 1 and the second metal member 2. Each of the first metal member 1 and the second metal member 2 constitutes a part of a double skin panel and is a metal member that is in a shape of a plate and capable of being friction-stir-welded.

The stacking process is intended to stack the first metal member 41 and the second metal member 51 on each other. In this process, a top face 41a of the first metal member 41 and a back face 51a of the second metal member 51 come in contact with each other and an overlapped portion J3 is formed.

In the friction stirring process of this embodiment, friction-stir-welding is performed on the overlapped portion J3 using the rotary tool F1D. During the friction stirring process, the rotary tool F1D that is rotating is inserted through a top face 51b of the second metal member 51 and is made to move on the top face 51b of the second metal member 51. The insertion depth of the rotary tool F1D is set to such a depth that at least a portion of the base side pin F3 is in contact with the top face 51b of the second metal member 51. That is, friction-stir-welding is under way with the circumferential face of the base side pin F3 of the rotary tool F1D holding down the top face 51b of the second metal member 51. Moreover, the insertion depth of the rotary tool F1D is set to such a depth that the tip face F7 of the protruding portion F6 is kept under the overlapped portion J3 while the flat face F5 of the tip side pin F4 is kept over the overlapped portion J3. In other words, the insertion depth of the rotary tool F1D is set to such a depth that the overlapped portion J3 is on the side of the protruding portion F6.

The joining method of the fifth embodiment as described above uses the rotary tool F1D comprising the base side pin F3 having a tapered shape with a taper angle A and the tip side pin F4 having a tapered shape with a taper angle B that is smaller than the taper angle A. The rotary tool F1D having this configuration can be easily inserted into the second metal member 51. In addition, since the taper angle B of the tip side pin F4 is relatively small, the rotary tool F1D can be pushed easily to a deep position in the second metal member 51. Moreover, since the taper angle B of the tip side pin F4 is relatively small, the plastically flowing material is better inhibited from moving downward compared with the rotary tool 901. As a result, formation of a kissing bond under the plasticized region is prevented. On the other hand, since the base side pin F3 has the taper angle A that is relatively large, members to be joined can be reliably joined together even if the thickness of the members or the height position of joining varies.

Moreover, since the circumferential face of the base side pin F3 holds down the plastically flowing material, the concave groove that is formed on the joined surface can be made smaller and the bank portion that can be generated on each side of the concave groove is not made or is made lower. In addition, since the step portion 110 in a staircase shape is relatively shallow and has a relatively wide exit, the plastically flowing material can easily move out of the step portion 110 while it is being held down by the step bottom face 110a. Therefore, it is difficult for the plastically flowing material to adhere to the circumferential face of the of the base side pin F3 though the plastically flowing material is held down by the base side pin F3. As a result, the surface roughness can be made smaller and the joining quality is preferably stabilized.

Furthermore, since the tip side pin F4 of the rotary tool F1D has the flat face F5, the plastically flowing material winding up around the protruding portion F6 is held down by the flat face F5 in the present embodiment. In addition, the tip face F7 of the protruding portion F6 is inserted deep over the overlapped portion J3. Accordingly, oxide films in each of the upper overlapped portion J1a and the lower overlapped portion J2a are reliably broken.

In the present embodiment, the insertion depth may be set to such a depth that the tip face F7 of the protruding portion F6 comes above the overlapped portion J3. That is, the insertion depth of the rotary tool F1D may be set to such a depth that the tip side pin F4 is in contact only with the second metal member 51. In this case, at least a portion of the base side pin F3 has to be in contact with the top face 51b of the second metal member 51. In this case, the overlapped portion J3 is plasticized by friction heat between the rotary tool F1D and the second metal member 51.

In the friction stirring process of this embodiment, the flat face F5 of the tip side pin F4 may be inserted deep across and over the overlapped portion J3.

In addition, friction-stir welding may be further performed on the overlapped portion J3 with the rotary tool F1D inserted from the back face 41b of the first metal member 41. When this friction stir welding is performed, the front side plasticized region and the back side plasticized region may partially overlap with each other.

### <Sixth embodiment>

Next, a sixth embodiment of the present invention is described with reference to Fig. 16. A preparation process, a stacking process and a friction stirring process are performed in the joining method of this embodiment. The joining method of this embodiment differs from the fifth embodiment in the rotary tool. The following description focusses on the different configuration.

As is shown in Fig. 16, the rotary tool F1 used for this embodiment differs from the rotary tool F1D used for the fifth embodiment in that the rotary tool F1 does not have a protruding portion F6 protruding from the flat face F5 of the tip side pin F4.

In the friction stirring process of this embodiment, the rotary tool F1 that is rotating is inserted into the second metal member 51 from the top face 51b of the second metal member 51 and is made to move along the top face 61b of the second metal member 51. The insertion depth of the rotary tool F1 is set to such a depth that at least a portion of the base side pin F3 is in contact with the top face 51b of the second metal member 51. That is, friction stir welding is under way with the circumferential face of the base side pin F3 of the rotary tool F1 holding down the top face 51b of the second metal member 51. Moreover, the insertion depth of the rotary tool F1 is set to such a depth that the flat face F5 of the tip side pin F4 is above the overlapped portion J3. That is, the insertion depth of the rotary tool F1 is set to such a depth that the tip side pin F4 is in contact only with the second metal member 51. In other words, the insertion depth of the rotary tool F1 is smaller than the depth of the overlapped portion J3 so that the flat face F5 of the tip side pin F4 does not come in contact with the overlapped portion J3. In this case, the overlapped portion is plasticized by the friction heat between the rotary tool F1 and the second metal member 51.

The joining method of the sixth embodiment as described above has more or less the same effect as the fifth embodiment.

In this embodiment, the insertion depth of the rotary tool F1 may be set to such a depth that the flat face F5 of the tip side pin F4 comes below the overlapped portion J3. That is, the insertion depth of the rotary tool F1 is set to such a depth that the tip side pin F4 is in contact with both the second metal member 51 and the first metal member 41. In other words, the insertion depth of the rotary tool F1 may be larger than the depth of the overlapped portion J3 so that the overlapped portion J3 is on the side of the tip side pin F4. In this case, at least a portion of the base side pin F3 has to be in contact with the top face 51b of the second metal member 51.

In addition, friction-stir welding may be further performed on the overlapped portion J3 with the rotary tool F1D inserted from the back face 41b of the first metal member 41. When this friction stir welding is performed, the front side plasticized region and the back side plasticized region may partially overlap with each other.

### <Modified example>

Next, modified examples of the rotary tools F1, F1D used for the embodiments above described are described.

Fig.17 is a cross-sectional view of a rotary tool of a first modified example of the rotary tool used for the embodiments above described. A rotary tool F1A of a first modified example as shown in Fig.17 has the step angle C equal to 85° between the step bottom face 110a and the step side face 110b of the step portion 110. The step bottom face 110a is in parallel with the horizontal face. Like this example, the step angle C may be such an acute angle that the plastically flowing material moves out of the step portion 110 without being stuck at and adhering to the step portion 110, with the step bottom face 110a in parallel with the horizontal face.

Fig.18 is a cross-sectional view of a rotary tool of a second modified example of the rotary tool used for the embodiments above described. A rotary tool F1B of the second modified example has the step portion 110 with a step angle C equal to 115°. The step bottom face 110a is in parallel with the horizontal face. Like this example, the step angle C may be such an obtuse angle that the step portion 110 functions as a step, with the step bottom face 110a in parallel with the horizontal face.

Fig.19 is a cross-sectional view of a rotary tool of a third modified example of the rotary tool used for the embodiments above described. As shown in Fig.19, the step bottom face 110a slopes upward at an angle of 10° in the direction from the rotation axis to the circumference. The step side face 110b is in parallel with the vertical face. Like this example, the step bottom face 110a may have such an upward slope relative to the horizontal face in the direction from the rotation axis of the tool to the circumference that the plastically flowing material can be held down while friction stir welding is under way. If any of the rotation tools of the first to third examples is used, the same effect as is obtained by the embodiments above described is obtained.

The embodiments of the present invention as described above may be appropriately modified with the scope of the present invention.

## Claims

1. A joining method for joining a first metal member (1) and a second metal member (2) together using a rotary tool (F1D) for friction stirring comprising a base side pin(F3) and a tip side pin (F4), comprising:
a preparation process of forming a first step bottom face (15a, 16a) and a first step side face (15b, 16b) on a top face (11b, 12b) of an end portion of the first metal member (1) and forming a second step bottom face (25a, 26) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (25a, 26a) which are overlapped with each other and forming a top side abutted portion (J1b, J2b) of the first step side face (15b, 16b) and an end face (21a, 22a) of the second metal member which abut each other and a back side abutted portion (J1c, J2c) of the second step side face (25b, 26b) and an end face (11a, 12a) of the first metal member (1) which abut each other; and
a friction stirring process of inserting the tip side pin (F4) that is rotating into the top side abutted portion (J1b, J2b) and moving the rotary tool (F1D) along the top side abutted portion (J1b, J2b) with each of the base side pin (F3) and the tip side pin (F4) being in contact with both the first metal member (1) and the second metal member (2) to join each of the top side abutted portion (J1b, J2b) and the overlapped portion (J1a, J2a),
wherein the base side pin (F3) has a first taper angle (A) while the tip side pin (F4) has a second taper angle (B) that is smaller than the first taper angle (A), a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, wherein the tip side pin (F4) has a flat face (F5) that is vertical to a rotation axis of the rotary tool (F1D) and a protruding portion (F6) protruding from the flat face (F5), and wherein each of the first metal member (1) and the second metal member (2) is made of aluminium or aluminium alloys, and
wherein each of the top side abutted portion (J1b, J2b) and the overlapped portion (J1a, J2a) is being joined with the flat face (F5) being in contact with both the first metal member (1) and the second metal member (2) and with a tip face (F7) of the protruding portion (F6) being inserted deeper than the overlapped portion (J1a, J2a) in the friction stirring process.

2. A joining method for joining a first metal member (1) and a second metal member (2) together using a rotary tool (F1D) for friction stirring comprising a base side pin (F3) and a tip side pin (F4), comprising:
a preparation process of forming a first step bottom face (15a, 16a) and a first step side face (15b, 16b) on a top face (11b, 12b) of an end portion of the first metal member (1) and forming a second step bottom face (25a, 26a) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (15a, 16a) which are overlapped with each other and forming a top side abutted portion (J1b, J2b) of the first step side face (15b, 16b) and an end face (21a, 22a) of the second metal member (2) which abut each other and a back side abutted portion (J1c, J2c) of the second step side face (25b, 26b) and an end face (11a, 12a) of the first metal member (1) which abut each other; and
a friction stirring process of inserting the tip side pin (F4) that is rotating into the back side abutted portion (J1c, J2c) and moving the rotary tool (F1D) along the back side abutted portion (J1c, J2c) with each of the base side pin (F3) and the tip side pin (F4) being in contact with both the first metal member (1) and the second metal member (2) to join each of the back side abutted portion (J1c, J2c) and the overlapped portion (J1a, J2a),
wherein the base side pin (F3) has a first taper angle (A) while the tip side pin (F4) has a second taper angle (B) that is smaller than the first taper angle (A), a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, wherein the tip side pin (F4) has a flat face (F5) that is vertical to a rotation axis of the rotary tool (F1D) and a protruding portion (F6) protruding from the flat face (F5), and wherein each of the first metal member (1) and the second metal member (2) is made of aluminium or aluminium alloys, and
wherein each of the back side abutted portion (J1c, J2c) and the overlapped portion (J1a, J2a) are being joined with the flat face (F5) being in contact with both the first metal member (1) and the second metal member (2) and with a tip face (F7) of the protruding portion (F6) being inserted deeper than the overlapped portion (J1a, J2a) in the friction stirring process.

3. A joining method for joining a first metal member (1) and a second metal member (2) together using a rotary tool (F1D) for friction stirring comprising a base side pin (F3) and a tip side pin (F4), the joining method comprising:
a preparation process of forming a first step bottom face (15a, 16a) and a first step side face (15b, 16b) on a top face (11b, 12b) of an end portion (11b, 12b) of the first metal member (1) and forming a second step bottom face (25a, 26a) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (25a, 26a) which are overlapped with each other and forming a top side abutted portion (J1b, J2b) of the first step side face (15b, 16b) and an end face (21a, 22a) of the second metal member which abut each other and a back side abutted portion (J1c, J2c) of the second step side face (25b, 26b) and an end face (11a, 12a) of the first metal member which abut each other; and
a friction stirring process of inserting the tip side pin (F4) that is rotating into the top side abutted portion (J1b, J2b) and moving the rotary tool (F1D) along the top side abutted portion (J1b, J2b) with each of the base side pin (F3) and the tip side pin (F4) being in contact with both the first metal member (1) and the second metal member (2) to join the joined top side abutted portion (J1b, J2b),
wherein the base side pin (F3) has a first taper angle (A) while the tip side pin (F4) has a second taper angle (B) that is smaller than the first taper angle (A), a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, wherein the tip side pin (F4) has a flat face (F5) that is vertical to a rotation axis of the rotary tool (F1D) and a protruding portion (F6) protruding from the flat face (F5), and wherein each of the first metal member (1) and the second metal member (2) is made of aluminium or aluminium alloys, and
wherein the top side abutted portion (J1b, J2b) is being joined with each of the flat face (F5) and a tip face (F7) of the protruding portion (F6) being in contact with both the first metal member (1) and the second metal member (2) in the friction stirring process.

4. A joining method for joining a first metal member (1) and a second metal member (2) together using a rotary tool (F1D) for friction stirring comprising a base side pin (F3) and a tip side pin (F4), comprising:
a preparation process of forming a first step bottom face (15a, 16a) and a first step side face (15b, 16b) on a top face (11b, 12b) of an end portion of the first metal member (1) and forming a second step bottom face (25a, 26a) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (25a, 26a) which are overlapped with each other and forming a top side abutted portion (J1a, J2a) of the first step side face (15b, 16b) and an end face (21a, 22a) of the second metal member (2) which abut each other and a back side abutted portion (J1c, J2c) of the second step side face (25b, 26b) and an end face (11a, 12a) of the first metal member (1) which abut each other; and
a friction stirring process of inserting the tip side pin (F4) that is rotating into the back side abutted portion (J1c, J2c) and moving the rotary tool (F1D) along the back side abutted portion (J1c, J2c) with each of the base side pin (F3) and the tip side pin (F4) being in contact with both the first metal member (1) and the second metal member (2) to join the back side abutted portion (J1c, J2c),
wherein the base side pin (F3) has a first taper angle (A) while the tip side pin (F4) has a second taper angle (B) that is smaller than the first taper angle (A), a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, wherein the tip side pin has a flat face (F5) that is vertical to a rotation axis of the rotary tool (F1D) and a protruding portion (F6) protruding from the flat face (F5), and wherein each of the first metal member (1) and the second metal member (2) is made of aluminium or aluminium alloys, and
wherein the back side abutted portion (J1c, J2c) is being joined with each of the flat face (F5) and a tip face (F7) of the protruding portion (F6) being in contact with both the first metal member (1) and the second metal member (2) in the friction stirring process.

5. A joining method for joining a first metal member (1) and a second metal member (2) together using a rotary tool (F1) for friction stirring comprising a base side pin (F3) and a tip side pin (F4), comprising:
a preparation process of forming a first step bottom face (15a, 16a) and a first step side face (15b, 16b) on a top face (11b, 12b) of an end portion of the first metal member (1) and forming a second step bottom face (25a, 26a) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (25a, 26a) which are overlapped with each other and forming a top side abutted portion (J1b, J2b) of the first step side face (15b, 16b) and an end face (21a, 22a) of the second metal member which abut each other and a back side abutted portion (J1c, J2c) of the second step side face (25b, 26b) and an end face (11a, 12a) of the first metal member (1) which abut each other; and
a friction stirring process of inserting the tip side pin (F4) that is rotating into the top side abutted portion (J1b, J2b) and moving the rotary tool (F1) along the top side abutted portion (J1b, J2b) with each of the base side pin (F3) and the tip side pin (F4) being in contact with both the first metal member (1) and the second metal member (2) to join the top side abutted portion (J1b, J2b),
wherein the base side pin (F3) has a first taper angle (A) while the tip side pin (F4) has a second taper angle (B) that is smaller than the first taper angle (A) and a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, and wherein each of the first metal member (1) and the second metal member (2) is made of aluminium or aluminium alloys.

6. A joining method for joining a first metal member (1) and a second metal member (2) together using a rotary tool (F1) for friction stirring comprising a base side pin (F3) and a tip side pin (F4), comprising:
a preparation process of forming a first step bottom face (15a, 16a) and a first step side face (15b, 16b) on a top face (11b, 12b) of an end portion of the first metal member (1) and forming a second step bottom face (25a, 26a) and a second step side face (25b, 26b) on a back face (21c, 22c) of an end portion of the second metal member (2);
an overlapping and abutting process of forming an overlapped portion (J1a, J2a) of the first step bottom face (15a, 16a) and the second step bottom face (25a, 26a) which are overlapped with each other and forming a top side abutted portion (J1b, J2b) of the first step side face (15b, 16b) and an end face (21a, 22a) of the second metal member (2) which abut each other and a back side abutted portion (J1c, J2c) of the second step side face (25b, 26b) and an end face (11a, 12a) of the first metal member (1) which abut each other, and
a friction stirring process of inserting the tip side pin (F4) that is rotating into the back side abutted portion (J1c, J2c) and moving the rotary tool (F1) along the back side abutted portion (J1c, J2c) with each of the base side pin (F3) and the tip side pin (F4) being in contact with both the first metal member (1) and the second metal member (2) to join the back side abutted portion (J1c, J2c),
wherein the base side pin (F3) has a first taper angle (A) while the tip side pin (F4) has a second taper angle (B) that is smaller than the first taper angle (A) and a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, and wherein each of the first metal member (1) and the second metal member (2) is made of aluminium or aluminium alloys.

7. The joining method as described in claim 5 or 6, wherein a flat face (F5) formed on a tip of the tip side pin (F4) is inserted deeper than the overlapped portion (J1a, J2a) in the friction stirring process.

8. A joining method for joining a first metal member (41) and a second metal member (51) together using a rotary tool (F1D) for friction stirring comprising a base side pin (F3) and a tip side pin (F4), comprising:
a stacking process of forming an overlapped portion (J3) of a top face (41a) of the first metal member (41) and a back face (51a) of the second metal member (51) which are overlapped with each other; and
a friction stirring process of inserting the tip side pin (F4) that is rotating into the overlapped portion (J3) from a surface (51b) of the second metal member (51) so that only the tip side pin (F4) is in contact with the first metal member (41) and moving the rotary tool (F1D) along the overlapped portion (J3) with the base side pin (F3) and the tip side pin (F4) both being in contact with the second metal member (51) to join the overlapped portion (J3),
wherein the base side pin (F3) has a first taper angle (A) while the tip side pin (F4) has a second taper angle (B) that is smaller than the first taper angle (A), a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, wherein the tip side pin (F4)has a flat face (F5) that is vertical to a rotation axis of the rotary tool (F1D) and a protruding portion (F6) protruding from the flat face, and wherein each of the first metal member (1) and the second metal member (2) is made of aluminium or aluminium alloys, and
wherein the overlapped portion (J3) is being joined with the flat face (F5) being in contact with the second metal member (51) and a tip face (F7) of the protruding portion (F6) being in contact with the first metal member (41) in the friction stirring process.

9. A joining method for joining a first metal member (41) and a second metal member (51) together using a rotary tool (F1) for friction stirring comprising a base side pin (F3) and a tip side pin (F4), comprising:
a stacking process of forming an overlapped portion (J3) of a top face (41a) of the first metal member (41) and a back face (51a) of the second metal member (51) which are overlapped with each other; and
a friction stirring process of inserting the tip side pin (F4) that is rotating into the overlapped portion (J3) from a surface (51a) of the second metal member (51) and moving the rotary tool (F1) along the overlapped portion (J3) with the base side pin (F3) and the tip side pin (F4) both being in contact with the second metal member (51) to join the overlapped portion (J3),
wherein the base side pin (F3) has a first taper angle (A) while the tip side pin (F4) has a second taper angle (B) that is smaller than the first taper angle (A) and a circumferential face of the base side pin (F3) has a step portion (110) being a spiral shape in plan view and a staircase shape in cross-sectional view formed thereon, wherein the step portion (110) includes a step bottom face (110a) and a step side face (110b), wherein the step bottom face (110a) slopes in the direction of the circumference from the rotation axis of the rotary tool (F1; F1D) to the circumference at an angle within -5° to 15° relative to the horizontal face, wherein a step angle (C) between the step bottom face (110a) and the step side face (110b) is 85° to 120°, and wherein each of the first metal member (1) and the second metal member (2) is made of aluminium or aluminium alloys, and
wherein the overlapped portion (J3) is being joined with the tip side pin (F4) being in contact either with only the second metal member (51) or with both the second metal member (51) and the first metal member (41).

## Patentansprüche

1. Verbindungsverfahren zum Verbinden eines ersten Metallglieds (1) und eines zweiten Metallglieds (2) miteinander unter Verwendung eines Drehwerkzeugs (F1D) zum Reibrühren, das einen basisseitigen Stift (F3) und einen spitzenseitigen Stift (F4) umfasst, umfassend:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts des ersten Metallglieds (1), und Bilden einer zweiten Stufenbodenfläche (25a, 26) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (25a, 26a), die miteinander überlappt werden, und Bilden eines oberseitigen anstoßenden Abschnitts (J1b, J2b) der ersten Stufenseitenfläche (15b, 16b) und einer Endfläche (21a, 22a) des zweiten Metallglieds, die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds (1), die aneinanderstoßen; und
einen Reibrührprozess zum Einführen des spitzenseitigen Stifts (F4), der sich dreht, in den oberseitigen anstoßenden Abschnitt (J1b, J2b) und Bewegen des Drehwerkzeugs (F1D) entlang des oberseitigen anstoßenden Abschnitts (J1b, J2b), wobei jeder von dem basisseitigen Stift (F3) und dem spitzenseitigen Stift (F4) mit beiden, dem ersten Metallglied (1) und dem zweiten Metallglied (2) in Kontakt ist, um jeden von dem oberseitigen anstoßenden Abschnitt (J1b, J2b) und dem überlappenden Abschnitt (J1a, J2a) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, wobei der spitzenseitige Stift (F4) eine flache Fläche (F5) aufweist, die zu einer Drehachse des Drehwerkzeugs (F1D) vertikal ist, und einen vorspringenden Abschnitt (F6), der aus der flachen Fläche (F5) vorspringt, und wobei jedes von dem ersten Metallglied (1) und dem zweiten Metallglied (2) aus Aluminium oder Aluminiumlegierungen besteht, und
wobei jeder von dem oberseitigen anstoßenden Abschnitt (J1b, J2b) und dem überlappenden Abschnitt (J1a, J2a) verbunden wird, wobei beim Reibrührprozess die flache Fläche (F5) mit beiden, dem ersten Metallglied (1) und dem zweiten Metallglied (2) in Kontakt ist, und wobei eine Spitzenfläche (F7) des vorspringenden Abschnitts (F6) tiefer eingeführt wird als der überlappende Abschnitt (J1a, J2a).

2. Verbindungsverfahren zum Verbinden eines ersten Metallglieds (1) und eines zweiten Metallglieds (2) miteinander unter Verwendung eines Drehwerkzeugs (F1D) zum Reibrühren, das einen basisseitigen Stift (F3) und einen spitzenseitigen Stift (F4) umfasst, umfassend:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts des ersten Metallglieds (1), und Bilden einer zweiten Stufenbodenfläche (25a, 26a) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (15a, 16a), die miteinander überlappt werden, und Bilden eines oberseitigen anstoßenden Abschnitts (J1b, J2b) der ersten Stufenseitenfläche (15b, 16b) und einer Endfläche (21a, 22a) des zweiten Metallglieds (2), die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds (1), die aneinanderstoßen; und
einen Reibrührprozess zum Einführen des spitzenseitigen Stifts (F4), der sich dreht, in den rückseitigen anstoßenden Abschnitt (J1c, J2c) und Bewegen des Drehwerkzeugs (F1D) entlang des rückseitigen anstoßenden Abschnitts (J1c, J2c), wobei jeder von dem basisseitigen Stift (F3) und dem spitzenseitige Stift (F4) mit beiden, dem ersten Metallglied (1) und dem zweiten Metallglied (2) in Kontakt ist, um jeden von dem rückseitigen anstoßenden Abschnitt (J1c, J2c) und dem überlappenden Abschnitt (J1a, J2a) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, wobei der spitzenseitige Stift (F4) eine flache Fläche (F5) aufweist, die zu einer Drehachse des Drehwerkzeugs (F1D) vertikal ist, und einen vorspringenden Abschnitt (F6), der aus der flachen Fläche (F5) vorspringt, und wobei jedes von dem ersten Metallglied (1) und dem zweiten Metallglied (2) aus Aluminium oder Aluminiumlegierungen besteht, und
wobei jeder von dem rückseitigen anstoßenden Abschnitt (J1c, J2c) und dem überlappenden Abschnitt (J1a, J2a) verbunden wird, wobei beim Reibrührprozess die flache Fläche (F5) mit beiden, dem ersten Metallglied (1) und dem zweiten Metallglied (2) in Kontakt ist und wobei eine Spitzenfläche (F7) des vorspringenden Abschnitts (F6) tiefer eingeführt wird als der überlappende Abschnitt (J1a, J2a).

3. Verbindungsverfahren zum Verbinden eines ersten Metallglieds (1) und eines zweiten Metallglieds (2) miteinander unter Verwendung eines Drehwerkzeugs (F1D) zum Reibrühren, das einen basisseitigen Stift (F3) und einen spitzenseitigen Stift (F4) umfasst, wobei das Verbindungsverfahren umfasst:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts (11b, 12b) des ersten Metallglieds (1), und Bilden einer zweiten Stufenbodenfläche (25a, 26a) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (25a, 26a), die miteinander überlappt werden, und Bilden eines oberseitigen anstoßenden Abschnitts (J1b, J2b) der ersten Stufenseitenfläche (15b, 16b) und einer Endfläche (21a, 22a) des zweiten Metallglieds, die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds, die aneinanderstoßen; und
einen Reibrührprozess zum Einführen des spitzenseitigen Stifts (F4), der sich dreht, in den oberseitigen anstoßenden Abschnitt (J1b, J2b) und Bewegen des Drehwerkzeugs (F1D) entlang des oberseitigen anstoßenden Abschnitts (J1b, J2b), wobei jeder von dem basisseitigen Stift (F3) und dem spitzenseitigen Stift (F4) mit beiden, dem ersten Metallglied (1) und dem zweiten Metallglied (2) in Kontakt ist, um den verbundenen oberseitigen anstoßenden Abschnitt (J1b, J2b) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, wobei der spitzenseitige Stift (F4) eine flache Fläche (F5) aufweist, die zu einer Drehachse des Drehwerkzeugs (F1D) vertikal ist, und einen vorspringenden Abschnitt (F6), der aus der flachen Fläche (F5) vorspringt, und wobei jedes von dem ersten Metallglied (1) und dem zweiten Metallglied (2) aus Aluminium oder Aluminiumlegierungen besteht, und
wobei der oberseitige anstoßende Abschnitt (J1b, J2b) verbunden wird, wobei im Reibrührprozess jeder von der flachen Fläche (F5) und einer Spitzenfläche (F7) des vorspringenden Abschnitts (F6) mit beiden, dem ersten Metallglied (1) und dem zweiten Metallglied (2) in Kontakt ist.

4. Verbindungsverfahren zum Verbinden eines ersten Metallglieds (1) und eines zweiten Metallglieds (2) miteinander unter Verwendung eines Drehwerkzeugs (F1D) zum Reibrühren, das einen basisseitigen Stift (F3) und einen spitzenseitigen Stift (F4) umfasst, umfassend:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts des ersten Metallglieds (1), und Bilden einer zweiten Stufenbodenfläche (25a, 26a) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (25a, 26a), die miteinander überlappt werden, und Bilden eines oberseitigen anstoßenden Abschnitts (J1a, J2a) der ersten Stufenseitenfläche (15b, 16b) und einer Endfläche (21a, 22a) des zweiten Metallglieds (2), die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds (1), die aneinanderstoßen; und
einen Reibrührprozess zum Einführen des spitzenseitigen Stifts (F4), der sich dreht, in den rückseitigen anstoßenden Abschnitt (J1c, J2c) und Bewegen des Drehwerkzeugs (F1D) entlang des rückseitigen anstoßenden Abschnitts (J1c, J2c), wobei jeder von dem basisseitigen Stift (F3) und dem spitzenseitige Stift (F4) mit beiden, dem ersten Metallglied (1) und dem zweiten Metallglied (2) in Kontakt ist, um den rückseitigen anstoßenden Abschnitt (J1c, J2c) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, wobei der spitzenseitige Stift eine flache Fläche (F5) aufweist, die zu einer Drehachse des Drehwerkzeugs (F1D) vertikal ist, und einen vorspringenden Abschnitt (F6), der aus der flachen Fläche (F5) vorspringt, und wobei jedes von dem ersten Metallglied (1) und dem zweiten Metallglied (2) aus Aluminium oder Aluminiumlegierungen besteht, und
wobei der rückseitige anstoßende Abschnitt (J1c, J2c) verbunden wird, wobei im Reibrührprozess jeder von der flachen Fläche (F5) und einer Spitzenfläche (F7) des vorspringenden Abschnitts (F6) mit beiden, dem ersten Metallglied (1) und dem zweiten Metallglied (2) in Kontakt ist.

5. Verbindungsverfahren zum Verbinden eines ersten Metallglieds (1) und eines zweiten Metallglieds (2) miteinander unter Verwendung eines Drehwerkzeugs (F1) zum Reibrühren, das einen basisseitigen Stift (F3) und einen spitzenseitigen Stift (F4) umfasst, umfassend:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts des ersten Metallglieds (1), und Bilden einer zweiten Stufenbodenfläche (25a, 26a) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (25a, 26a), die miteinander überlappt werden, und Bilden eines oberseitigen anstoßenden Abschnitts (J1b, J2b) der ersten Stufenseitenfläche (15b, 16b) und einer Endfläche (21a, 22a) des zweiten Metallglieds, die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds (1), die aneinanderstoßen; und
einen Reibrührprozess zum Einführen des spitzenseitigen Stifts (F4), der sich dreht, in den oberseitigen anstoßenden Abschnitt (J1b, J2b) und Bewegen des Drehwerkzeugs (F1) entlang des oberseitigen anstoßenden Abschnitts (J1b, J2b), wobei jeder von dem basisseitigen Stift (F3) und dem spitzenseitigen Stift (F4) mit beiden, dem ersten Metallglied (1) und dem zweiten Metallglied (2) in Kontakt ist, um den oberseitigen anstoßenden Abschnitt (J1b, J2b) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A) und eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, und wobei jedes von dem ersten Metallglied (1) und dem zweiten Metallglied (2) aus Aluminium oder Aluminiumlegierungen besteht.

6. Verbindungsverfahren zum Verbinden eines ersten Metallglieds (1) und eines zweiten Metallglieds (2) miteinander unter Verwendung eines Drehwerkzeugs (F1) zum Reibrühren, das einen basisseitigen Stift (F3) und einen spitzenseitigen Stift (F4) umfasst, umfassend:
einen Vorbereitungsprozess zum Bilden einer ersten Stufenbodenfläche (15a, 16a) und einer ersten Stufenseitenfläche (15b, 16b) an einer oberen Fläche (11b, 12b) eines Endabschnitts des ersten Metallglieds (1), und Bilden einer zweiten Stufenbodenfläche (25a, 26a) und einer zweiten Stufenseitenfläche (25b, 26b) an einer hinteren Fläche (21c, 22c) eines Endabschnitts des zweiten Metallglieds (2);
einen Überlappungs- und Stoßprozess zum Bilden eines überlappten Abschnitts (J1a, J2a) der ersten Stufenbodenfläche (15a, 16a) und der zweiten Stufenbodenfläche (25a, 26a), die miteinander überlappt werden, und Bilden eines oberseitigen anstoßenden Abschnitts (J1b, J2b) der ersten Stufenseitenfläche (15b, 16b) und einer Endfläche (21a, 22a) des zweiten Metallglieds (2), die aneinanderstoßen, und eines rückseitigen anstoßenden Abschnitts (J1c, J2c) der zweiten Stufenseitenfläche (25b, 26b) und einer Endfläche (11a, 12a) des ersten Metallglieds (1), die aneinanderstoßen; und
einen Reibrührprozess zum Einführen des spitzenseitigen Stifts (F4), der sich dreht, in den rückseitigen anstoßenden Abschnitt (J1c, J2c) und Bewegen des Drehwerkzeugs (F1) entlang des rückseitigen anstoßenden Abschnitts (J1c, J2c), wobei jeder von dem basisseitigen Stift (F3) und dem spitzenseitige Stift (F4) mit beiden, dem ersten Metallglied (1) und dem zweiten Metallglied (2) in Kontakt ist, um den rückseitigen anstoßenden Abschnitt (J1c, J2c) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A) und eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, und wobei jedes von dem ersten Metallglied (1) und dem zweiten Metallglied (2) aus Aluminium oder Aluminiumlegierungen besteht.

7. Verbindungsverfahren wie in Anspruch 5 oder 6 beschrieben, wobei eine flache Fläche (F5), die an einer Spitze des spitzenseitigen Stifts (F4) gebildet ist, im Reibrührprozess tiefer eingeführt wird als der überlappte Abschnitt (J1a, J2a).

8. Verbindungsverfahren zum Verbinden eines ersten Metallglieds (41) und eines zweiten Metallglieds (51) miteinander unter Verwendung eines Drehwerkzeugs (F1D) zum Reibrühren, das einen basisseitigen Stift (F3) und einen spitzenseitigen Stift (F4) umfasst, umfassend:
einen Stapelprozess zum Bilden eines überlappten Abschnitts (J3) einer oberen Fläche (41a) des ersten Metallglieds (41) und einer hinteren Fläche (51a) des zweiten Metallglieds (51), die miteinander überlappt werden; und
einen Reibrührprozess zum Einführen des spitzenseitigen Stifts (F4), der sich dreht, in den überlappten Abschnitt (J3) von einer Oberfläche (51b) des zweiten Metallglieds (51) sodass nur der spitzenseitige Stift (F4) mit dem ersten Metallglied (41) in Kontakt ist, und Bewegen des Drehwerkzeugs (F1D) entlang des überlappten Abschnitts (J3), wobei der basisseitige Stift (F3) und der spitzenseitige Stift (F4) beide mit dem zweiten Metallglied (51) in Kontakt sind, um den überlappten Abschnitt (J3) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, wobei der spitzenseitige Stift (F4) eine flache Fläche (F5) aufweist, die zu einer Drehachse des Drehwerkzeugs (F1D) vertikal ist, und einen vorspringenden Abschnitt (F6), der aus der flachen Fläche vorspringt, und wobei jedes von dem ersten Metallglied (1) und dem zweiten Metallglied (2) aus Aluminium oder Aluminiumlegierungen besteht, und
wobei der überlappte Abschnitt (J3) verbunden wird, wobei im Reibrührprozess die flache Fläche (F5) mit dem zweiten Metallglied (51) in Kontakt ist, und sich eine Spitzenfläche (F7) des vorspringenden Abschnitts (F6) mit dem ersten Metallglied (41) in Kontakt ist.

9. Verbindungsverfahren zum Verbinden eines ersten Metallglieds (41) und eines zweiten Metallglieds (51) miteinander unter Verwendung eines Drehwerkzeugs (F1) zum Reibrühren, das einen basisseitigen Stift (F3) und einen spitzenseitigen Stift (F4) umfasst, umfassend:
einen Stapelprozess zum Bilden eines überlappten Abschnitts (J3) einer oberen Fläche (41a) des ersten Metallglieds (41) und einer hinteren Fläche (51a) des zweiten Metallglieds (51), die miteinander überlappt werden; und
einen Reibrührprozess zum Einführen des spitzenseitigen Stifts (F4), der sich dreht, in den überlappten Abschnitt (J3) von einer Oberfläche (51a) des zweiten Metallglieds (51), und Bewegen des Drehwerkzeugs (F1) entlang des überlappten Abschnitts (J3), wobei der basisseitige Stift (F3) und der spitzenseitige Stift (F4) beide mit dem zweiten Metallglied (51) in Kontakt sind, um den überlappten Abschnitt (J3) zu verbinden,
wobei der basisseitige Stift (F3) einen ersten Verjüngungswinkel (A) aufweist, während der spitzenseitige Stift (F4) einen zweiten Verjüngungswinkel (B) aufweist, der kleiner ist als der erste Verjüngungswinkel (A), und eine Umfangsfläche des basisseitigen Stifts (F3) einen Stufenabschnitt (110) aufweist, der in Draufsicht eine Spiralform und in Querschnittsansicht eine Treppenform daran gebildet aufweist, wobei der Stufenabschnitt (110) eine Stufenbodenfläche (110a) und eine Stufenseitenfläche (110b) beinhaltet, wobei die Stufenbodenfläche (110a) in der Richtung des Umfangs von der Drehachse des Drehwerkzeugs (F1; F1D) zum Umfang in einem Winkel innerhalb -5° bis 15° in Bezug zur horizontalen Fläche abfällt, wobei ein Stufenwinkel (C) zwischen der Stufenbodenfläche (110a) und der Stufenseitenfläche (110b) 85° bis 120° beträgt, und wobei jedes von dem ersten Metallglied (1) und dem zweiten Metallglied (2) aus Aluminium oder Aluminiumlegierungen besteht, und
wobei der überlappte Abschnitt (J3) verbunden wird, wobei der spitzenseitige Stift (F4) entweder mit nur dem zweiten Metallglied (51) oder mit beiden, dem zweiten Metallglied (51) und dem ersten Metallglied (41) in Kontakt ist.

## Revendications

1. Procédé d'assemblage pour assembler un premier élément métallique (1) et un second élément métallique (2) l'un à l'autre en utilisant un outil rotatif (F1D) pour agitation par friction comprenant une broche côté base (F3) et une broche côté pointe (F4), comprenant :
un processus de préparation consistant à former une première face de fond étagée (15a, 16a) et une première face latérale étagée (15b, 16b) sur une face supérieure (11b, 12b) d'une partie d'extrémité du premier élément métallique (1) et former une second face de fond étagée (25a, 26) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (25a, 26a) qui se chevauchent l'une l'autre et former une partie en butée latérale supérieure (J1b, J2b) de la première face latérale étagée (15b, 16b) et une face d'extrémité (21a, 22a) du second élément métallique qui viennent en butée l'une avec l'autre et une partie en butée latérale arrière (J1c, J2c) de la seconde face latérale étagée (25b, 26b) et une face d'extrémité (11a, 12a) du premier élément métallique (1) qui viennent en butée l'une avec l'autre ; et
un processus d'agitation par friction consistant à insérer la broche côté pointe (F4) qui tourne dans la partie en butée latérale supérieure (J1b, J2b) et déplacer l'outil rotatif (F1D) le long de la partie en butée latérale supérieure (J1b, J2b) avec chacune de la broche côté base (F3) et de la broche côté pointe (F4) étant en contact à la fois avec le premier élément métallique (1) et le second élément métallique (2) pour assembler chacune de la partie en butée latérale supérieure (J1b, J2b) et de la partie chevauchée (J1a, J2a),
dans lequel la broche côté base (F3) présente un premier angle de conicité (A) en même temps que la broche côté pointe (F4) présente un second angle de conicité (B) qui est inférieur au premier angle de conicité (A), une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, dans lequel la broche côté pointe (F4) présente une face plate (F5) qui est verticale par rapport à un axe de rotation de l'outil rotatif (F1D) et une partie saillante (F6) faisant saillie depuis la face plate (F5), et dans lequel chacun du premier élément métallique (1) et du second élément métallique (2) est composé d'aluminium ou d'alliages d'aluminium, et
dans lequel chacune de la partie en butée latérale supérieure (J1b, J2b) et de la partie chevauchée (J1a, J2a) est assemblée à la face plate (F5) qui est en contact à la fois avec le premier élément métallique (1) et le second élément métallique (2) et avec une face de pointe (F7) de la partie saillante (F6) qui est insérée plus profondément sur la partie chevauchée (J1a, J2a) lors du processus d'agitation par friction.

2. Procédé d'assemblage pour assembler un premier élément métallique (1) et un second élément métallique (2) l'un à l'autre en utilisant un outil rotatif (F1D) pour agitation par friction comprenant une broche côté base (F3) et une broche côté pointe (F4), comprenant :
un processus de préparation consistant à former une première face de fond étagée (15a, 16a) et une première face latérale étagée (15b, 16b) sur une face supérieure (11b, 12b) d'une partie d'extrémité du premier élément métallique (1) et former une second face de fond étagée (25a, 26a) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (15a, 16a) qui se chevauchent l'une l'autre et former une partie en butée latérale supérieure (J1b, J2b) de la première face latérale étagée (15b, 16b) et une face d'extrémité (21a, 22a) du second élément métallique (2) qui viennent en butée l'une avec l'autre et une partie en butée latérale arrière (J1c, J2c) de la seconde face latérale étagée (25b, 26b) et une face d'extrémité (11a, 12a) du premier élément métallique (1) qui viennent en butée l'une avec l'autre ; et
un processus d'agitation par friction consistant à insérer la broche côté pointe (F4) qui tourne dans la partie en butée latérale arrière (J1c, J2c) et déplacer l'outil rotatif (F1D) le long de la partie en butée latérale arrière (J1c, J2c) avec chacune de la broche côté base (F3) et de la broche côté pointe (F4) étant en contact à la fois avec le premier élément métallique (1) et le second élément métallique (2) pour assembler chacune de la partie en butée latérale arrière (J1c, J2c) et de la partie chevauchée (J1a, J2a),
dans lequel la broche côté base (F3) présente un premier angle de conicité (A) en même temps que la broche côté pointe (F4) présente un second angle de conicité (B) qui est inférieur au premier angle de conicité (A), une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, dans lequel la broche côté pointe (F4) présente une face plate (F5) qui est verticale par rapport à un axe de rotation de l'outil rotatif (F1D) et une partie saillante (F6) faisant saillie depuis la face plate (F5), et dans lequel chacun du premier élément métallique (1) et du second élément métallique (2) est composé d'aluminium ou d'alliages d'aluminium, et
dans lequel chacune de la partie en butée latérale arrière (J1c, J2c) et de la partie chevauchée (J1a, J2a) est assemblée à la face plate (F5) qui est en contact à la fois avec le premier élément métallique (1) et le second élément métallique (2) et avec une face de pointe (F7) de la partie saillante (F6) qui est insérée plus profondément sur la partie chevauchée (J1a, J2a) lors du processus d'agitation par friction.

3. Procédé d'assemblage pour assembler un premier élément métallique (1) et un second élément métallique (2) l'un à l'autre en utilisant un outil rotatif (F1D) pour agitation par friction comprenant une broche côté base (F3) et une broche côté pointe (F4), le procédé d'assemblage comprenant :
un processus de préparation consistant à former une première face de fond étagée (15a, 16a) et une première face latérale étagée (15b, 16b) sur une face supérieure (11b, 12b) d'une partie d'extrémité (11b, 12b) du premier élément métallique (1) et former une second face de fond étagée (25a, 26a) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (25a, 26a) qui se chevauchent l'une l'autre et former une partie en butée latérale supérieure (J1b, J2b) de la première face latérale étagée (15b, 16b) et une face d'extrémité (21a, 22a) du second élément métallique qui viennent en butée l'une avec l'autre et une partie en butée latérale arrière (J1c, J2c) de la seconde face latérale étagée (25b, 26b) et une face d'extrémité (11a, 12a) du premier élément métallique qui viennent en butée l'une avec l'autre ; et
un processus d'agitation par friction consistant à insérer la broche côté pointe (F4) qui tourne dans la partie en butée latérale supérieure (J1b, J2b) et déplacer l'outil rotatif (F1D) le long de la partie en butée latérale supérieure (J1b, J2b) avec chacune de la broche côté base (F3) et de la broche côté pointe (F4) étant en contact à la fois avec le premier élément métallique (1) et le second élément métallique (2) pour assembler la partie en butée latérale supérieure (J1b, J2b) assemblée,
dans lequel la broche côté base (F3) présente un premier angle de conicité (A) en même temps que la broche côté pointe (F4) présente un second angle de conicité (B) qui est inférieur au premier angle de conicité (A), une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, dans lequel la broche côté pointe (F4) présente une face plate (F5) qui est verticale par rapport à un axe de rotation de l'outil rotatif (F1D) et une partie saillante (F6) faisant saillie depuis la face plate (F5), et dans lequel chacun du premier élément métallique (1) et du second élément métallique (2) est composé d'aluminium ou d'alliages d'aluminium, et
dans lequel la partie en butée latérale supérieure (J1b, J2b) est assemblée à chacune de la face plate (F5) et d'une face de pointe (F7) de la partie saillante (F6) qui est en contact à la fois avec le premier élément métallique (1) et le second élément métallique (2) lors du processus d'agitation par friction.

4. Procédé d'assemblage pour assembler un premier élément métallique (1) et un second élément métallique (2) l'un à l'autre en utilisant un outil rotatif (F1D) pour agitation par friction comprenant une broche côté base (F3) et une broche côté pointe (F4), comprenant :
un processus de préparation consistant à former une première face de fond étagée (15a, 16a) et une première face latérale étagée (15b, 16b) sur une face supérieure (11b, 12b) d'une partie d'extrémité du premier élément métallique (1) et former une second face de fond étagée (25a, 26a) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (25a, 26a) qui se chevauchent l'une l'autre et former une partie en butée latérale supérieure (J1a, J2a) de la première face latérale étagée (15b, 16b) et une face d'extrémité (21a, 22a) du second élément métallique (2) qui viennent en butée l'une avec l'autre et une partie en butée latérale arrière (J1c, J2c) de la seconde face latérale étagée (25b, 26b) et une face d'extrémité (11a, 12a) du premier élément métallique (1) qui viennent en butée l'une avec l'autre ; et
un processus d'agitation par friction consistant à insérer la broche côté pointe (F4) qui tourne dans la partie en butée latérale arrière (J1c, J2c) et déplacer l'outil rotatif (F1D) le long de la partie en butée latérale arrière (J1c, J2c) avec chacune de la broche côté base (F3) et de la broche côté pointe (F4) étant en contact à la fois avec le premier élément métallique (1) et le second élément métallique (2) pour assembler la partie en butée latérale arrière (J1c, J2c),
dans lequel la broche côté base (F3) présente un premier angle de conicité (A) en même temps que la broche côté pointe (F4) présente un second angle de conicité (B) qui est inférieur au premier angle de conicité (A), une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, dans lequel la broche côté pointe présente une face plate (F5) qui est verticale par rapport à un axe de rotation de l'outil rotatif (F1D) et une partie saillante (F6) faisant saillie depuis la face plate (F5), et dans lequel chacun du premier élément métallique (1) et du second élément métallique (2) est composé d'aluminium ou d'alliages d'aluminium, et
dans lequel la partie en butée latérale arrière (J1c, J2c) est assemblée à chacune de la face plate (F5) et d'une face de pointe (F7) de la partie saillante (F6) qui est en contact à la fois avec le premier élément métallique (1) et le second élément métallique (2) lors du processus d'agitation par friction.

5. Procédé d'assemblage pour assembler un premier élément métallique (1) et un second élément métallique (2) l'un à l'autre en utilisant un outil rotatif (F1) pour agitation par friction comprenant une broche côté base (F3) et une broche côté pointe (F4), comprenant :
un processus de préparation consistant à former une première face de fond étagée (15a, 16a) et une première face latérale étagée (15b, 16b) sur une face supérieure (11b, 12b) d'une partie d'extrémité du premier élément métallique (1) et former une second face de fond étagée (25a, 26a) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (25a, 26a) qui se chevauchent l'une l'autre et former une partie en butée latérale supérieure (J1b, J2b) de la première face latérale étagée (15b, 16b) et une face d'extrémité (21a, 22a) du second élément métallique qui viennent en butée l'une avec l'autre et une partie en butée latérale arrière (J1c, J2c) de la seconde face latérale étagée (25b, 26b) et une face d'extrémité (11a, 12a) du premier élément métallique (1) qui viennent en butée l'une avec l'autre ; et
un processus d'agitation par friction consistant à insérer la broche côté pointe (F4) qui tourne dans la partie en butée latérale supérieure (J1b, J2b) et déplacer l'outil rotatif (F1) le long de la partie en butée latérale supérieure (J1b, J2b) avec chacune de la broche côté base (F3) et de la broche côté pointe (F4) étant en contact à la fois avec le premier élément métallique (1) et le second élément métallique (2) pour assembler la partie en butée latérale supérieure (J1b, J2b),
dans lequel la broche côté base (F3) présente un premier angle de conicité (A) en même temps que la broche côté pointe (F4) présente un second angle de conicité (B) qui est inférieur au premier angle de conicité (A) et une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, et dans lequel chacun du premier élément métallique (1) et du second élément métallique (2) est composé d'aluminium ou d'alliages d'aluminium.

6. Procédé d'assemblage pour assembler un premier élément métallique (1) et un second élément métallique (2) l'un à l'autre en utilisant un outil rotatif (F1) pour agitation par friction comprenant une broche côté base (F3) et une broche côté pointe (F4), comprenant :
un processus de préparation consistant à former une première face de fond étagée (15a, 16a) et une première face latérale étagée (15b, 16b) sur une face supérieure (11b, 12b) d'une partie d'extrémité du premier élément métallique (1) et former une second face de fond étagée (25a, 26a) et une second face latérale étagée (25b, 26b) sur une face arrière (21c, 22c) d'une partie d'extrémité du second élément métallique (2) ;
un processus de chevauchement et d'aboutement consistant à former une partie chevauchée (J1a, J2a) de la première face de fond étagée (15a, 16a) et de la seconde face de fond étagée (25a, 26a) qui se chevauchent l'une l'autre et former une partie en butée latérale supérieure (J1b, J2b) de la première face latérale étagée (15b, 16b) et une face d'extrémité (21a, 22a) du second élément métallique (2) qui viennent en butée l'une avec l'autre et une partie en butée latérale arrière (J1c, J2c) de la seconde face latérale étagée (25b, 26b) et une face d'extrémité (11a, 12a) du premier élément métallique (1) qui viennent en butée l'une avec l'autre ; et
un processus d'agitation par friction consistant à insérer la broche côté pointe (F4) qui tourne dans la partie en butée latérale arrière (J1c, J2c) et déplacer l'outil rotatif (F1) le long de la partie en butée latérale arrière (J1c, J2c) avec chacune de la broche côté base (F3) et de la broche côté pointe (F4) étant en contact à la fois avec le premier élément métallique (1) et le second élément métallique (2) pour assembler la partie en butée latérale arrière (J1c, J2c),
dans lequel la broche côté base (F3) présente un premier angle de conicité (A) en même temps que la broche côté pointe (F4) présente un second angle de conicité (B) qui est inférieur au premier angle de conicité (A) et une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, et dans lequel chacun du premier élément métallique (1) et du second élément métallique (2) est composé d'aluminium ou d'alliages d'aluminium.

7. Procédé d'assemblage tel que décrit dans la revendication 5 ou 6, dans lequel une face plate (F5) formée sur une pointe de la broche côté pointe (F4) est insérée plus profondément que la partie chevauchée (J1a, J2a) lors du processus d'agitation par friction.

8. Procédé d'assemblage pour assembler un premier élément métallique (41) et un second élément métallique (51) l'un à l'autre en utilisant un outil rotatif (F1D) pour agitation par friction comprenant une broche côté base (F3) et une broche côté pointe (F4), comprenant :
un processus d'empilement consistant à former une partie chevauchée (J3) d'une face supérieure (41a) du premier élément métallique (41) et d'une face arrière (51a) du second élément métallique (51) qui se chevauchent mutuellement ; et
un processus d'agitation par friction consistant à insérer la broche côté pointe (F4) qui tourne dans la partie chevauchée (J3) depuis une surface (51b) du second élément métallique (51) de telle sorte que seule la broche côté pointe (F4) est en contact avec le premier élément métallique (41) et déplacer l'outil rotatif (F1D) le long de la partie chevauchée (J3) avec la broche côté base (F3) et la broche côté pointe (F4) étant toutes deux en contact avec le second élément métallique (51) pour assembler la partie chevauchée (J3),
dans lequel la broche côté base (F3) présente un premier angle de conicité (A) en même temps que la broche côté pointe (F4) présente un second angle de conicité (B) qui est inférieur au premier angle de conicité (A), une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, dans lequel la broche côté pointe (F4) présente une face plate (F5) qui est verticale par rapport à un axe de rotation de l'outil rotatif (F1D) et une partie saillante (F6) faisant saillie depuis la face plate, et dans lequel chacun du premier élément métallique (1) et du second élément métallique (2) est composé d'aluminium ou d'alliages d'aluminium, et
dans lequel la partie chevauchée (J3) est assemblée à la face plate (F5) qui est en contact avec le second élément métallique (51) et une face de pointe (F7) de la partie saillante (F6) qui est en contact avec le premier élément métallique (41) lors du processus d'agitation par friction.

9. Procédé d'assemblage pour assembler un premier élément métallique (41) et un second élément métallique (51) l'un à l'autre en utilisant un outil rotatif (F1) pour agitation par friction comprenant une broche côté base (F3) et une broche côté pointe (F4), comprenant :
un processus d'empilement consistant à former une partie chevauchée (J3) d'une face supérieure (41a) du premier élément métallique (41) et d'une face arrière (51a) du second élément métallique (51) qui se chevauchent mutuellement ; et
un processus d'agitation par friction consistant à insérer la broche côté pointe (F4) qui tourne dans la partie chevauchée (J3) depuis une surface (51a) du second élément métallique (51) et déplacer l'outil rotatif (F1) le long de la partie chevauchée (J3) avec la broche côté base (F3) et la broche côté pointe (F4) étant toutes deux en contact avec le second élément métallique (51) pour assembler la partie chevauchée (J3),
dans lequel la broche côté base (F3) présente un premier angle de conicité (A) en même temps que la broche côté pointe (F4) présente un second angle de conicité (B) qui est inférieur au premier angle de conicité (A) et une face circonférentielle de la broche côté base (F3) présente une partie étagée (110) qui est en forme de spirale sur une vue en plan et une forme d'escalier sur une vue en coupe transversale formée sur celle-ci, dans lequel la partie étagée (110) inclut une face de fond étagée (110a) et une face latérale étagée (110b), dans lequel la face de fond étagée (110a) s'incline dans la direction de la circonférence depuis l'axe de rotation de l'outil rotatif (F1 ; F1D) à la circonférence selon un angle de -5° à 15° par rapport à la face horizontale, dans lequel un angle de pas (C) entre la face de fond étagée (110a) et la face latérale étagée (110b) est de 85° à 120°, et dans lequel chacun du premier élément métallique (1) et du second élément métallique (2) est composé d'aluminium ou d'alliages d'aluminium, et
dans lequel la partie chevauchée (J3) est assemblée à la broche côté pointe (F4) qui est en contact soit avec uniquement le second élément métallique (51) soit à la fois avec le second élément métallique (51) et le premier élément métallique (41).
